# EUROPÄISCHE PATENTSCHRIFT

(11) **EP 3 350 860 B1**
(45) Veröffentlichungstag und Bekanntmachung des Hinweises auf die Patenterteilung: **05.08.2020**
(21) Anmeldenummer: 16791314.4
(22) Anmeldetag: 16.09.2016
(51) Int. Cl.: H01M 8/0662, B01D 53/85, H01M 8/16

(54) **BIOBRENNSTOFFZELLE UND DEREN KOMBINATION MIT EINER MIKROBIELLEN EMISSIONSSENKE**
BIOFUEL CELL AND COMBINATION THEREOF WITH A MICROBIAL EMISSION SINK
BIOPILE À COMBUSTIBLE ET SA COMBINAISON AVEC UN PIÈGE RÉCEPTEUR MICROBIEN

(30) Priorität: 18.09.2015 DE 102015011964
(43) Veröffentlichungstag der Anmeldung: 25.07.2018
(73) Patentinhaber: MWK Bionik GmbH, 83119 Obing (DE)
(72) Erfinder: WACKERBAUER, Matthias, 83119 Obing (DE)
(74) Vertreter: Stolmár & Partner Patentanwälte PartG mbB
(86) Internationale Anmeldenummer: PCT/EP2016/071991
(87) Internationale Veröffentlichungsnummer: WO 2017/046341

(56) Entgegenhaltungen:
- EP-A1- 0 669 155
- WO-A1-2015/103590
- JP-A- 2001 205 040
- KR-A- 20100 025 831
- KR-A- 20110 057 452
- US-A1- 2012 115 045

## Beschreibung

### Gebiet der Erfindung

Die vorliegende Erfindung betrifft eine kombinierte Vorrichtung umfassend eine Biobrennstoffzelle und einen Biofilter sowie ein Verfahren nutzend die vorgenannte Vorrichtung zur Erzeugung von elektrischem Strom und zur Aufreinigung von Gasgemischen.

### Stand der Technik

Brennstoffzellen erzeugen ähnlich einer Batterie als galvanische Zelle elektrische Energie direkt aus chemischer Energie. Dies bietet gegenüber konventioneller Stromerzeugung durch Verbrennung fossiler Brennstoffe den Vorteil, dass kein Umweg über Wärme und mechanische Energie notwendig ist, was zum höheren Wirkungsgrad von Brennstoffzellen führt, insbesondere, wenn neben der elektrischen auch die thermische Energie genutzt wird, die beim Betrieb der Brennstoffzelle entsteht. Von Batterien unterscheiden sich Brennstoffzellen dahingehend, dass der chemische Energieträger (meistens Wasserstoff, H₂) nicht in der Brennstoffzelle eingebaut ist, sondern im Betrieb kontinuierlich von außen der Anode als einer der beiden Elektroden zugeführt und an dieser unter Abgabe von Elektronen zu Wasserstoffionen (H⁺) oxidiert wird. Gleichzeitig wird ein Oxidationsmittel (z. B. Sauerstoff (O₂) oder ein sauerstoffhaltiges Gas wie Luft) der anderen Elektrode - der Kathode - zugeführt, an dieser durch die Aufnahme der Elektronen reduziert und das entstehende Produkt (z. B. Wasser) abgeführt. Die beiden Elektroden sind voneinander durch einen Elektrolyten (einen lonenleiter) oder eine semipermeable Membran getrennt. Es existieren mehrere Brennstoffzelltypen, wobei diese vorwiegend anhand des eingesetzten Elektrolyten klassifiziert werden. Diese Klassifizierung richtet sich nach der Art von elektro-chemischen Reaktionen, die in der Brennstoffzelle stattfinden, ob und welcher Katalysator benötigt wird, dem Temperaturbereich in welchem die Zelle betrieben wird und den benötigten chemischen Energieträger.

Die Betriebsbedingungen der meisten Brennstofftypen sind dabei häufig sehr anspruchsvoll. So werden in der alkalischen Brennstoffzelle (*alkaline fuel cell -* AFC) mit KOH und in der Phosphorsäure-Brennstoffzelle (*phosphoric acid fuel cell -* PAFC) mit Phosphorsäure hochkorrosive Elektrolyten eingesetzt, die die Lebensdauer der Zellen begrenzen. Die AFCs werden in einem Temperaturbereich von etwa 150 bis 220°C, PAFCs zwischen135 bis 200°C betrieben. In diesen Temperaturbereichen, die auch von weiteren Brennstoffzelltypen eingesetzt werden (Polymerelektrolyt-Brennstoffzelle 10-100°C, *proton exchange membrane fuel cells* bzw. *polymer electrolyte membrane* (PEM) bzw. *polymer electrolyte fuel cell -* PEMFC; Direktmethanol-Brennstoffzelle 60-130°C, *direct methanol fuel cell -* DMFC, Ameisensäure-Brennstoffzelle 30-40°C, *formic acid fuel cell -* FAFC) müssen die Elektroden mit Edelmetallen (Platin, Palladium, Ruthenium, bzw. deren Gemischen) als Katalysator beschichtet werden, da ansonsten die Redoxreaktionen zu langsam ablaufen. Dies erhöht den Aufwand und somit die Kosten solcher Brennstoffzellen. Dazu kommt, dass in niedrigen Temperaturbereichen CO an die katalytischen Zentren der Katalysatoren bindet und diese blockieren kann, wodurch Sauerstoff bzw. Wasserstoff nicht mehr umgesetzt werden können. Dieser Nachteil wird bei Brennstoffzellen überwunden, die bei höheren Temperaturen arbeiten, da dort die Redoxreaktionen schnell genug ablaufen und die Katalysatoren nicht mehr benötigt werden. Beispiele hierfür sind Schmelzkarbonat-Brennstoffzellen (*molten carbonate fuel cell -* MCFC) mit 550-700°C Betriebstemperatur und Festoxid-Brennstoffzellen (*solid oxide fuel cell -* SOFC) mit 450-1000°C. Die hohen Temperaturen führen allerdings zu entsprechendem Aufwand beim Aufbau und Betrieb dieser Zellen. Dazu kommt, dass die meisten Brennstoffzellentypen als chemischen Energieträger, bzw. "Brennstoff", Wasserstoff (H₂) erfordern. Andere möglichen Brennstoffe, wie Kohlenwasserstoffe und unter diesen auch Methan (CH₄), benötigen in der Regel den Betrieb bei hohen Temperaturen und werden demensprechend in MCFCs oder SOFCs eingesetzt. Bei Einsatz in anderen Brennstoffzellen werden kohlenwasserstoffhaltige Gase nicht direkt verwendet, da ein direkter Einsatz zur schnellen Verkokung und somit zur reduzierten Effizienz und Lebensdauer der Zellen führt. Weiterhin können etwaige Verunreinigungen der Gase, u.a. wie Schwefelrückstände oder Kohlenmonoxid, die Brennstoffzelle wie oben dargelegt "vergiften", indem sie an die Katalysatoren binden. Daher werden Kohlenwasserstoffe zumindest beim Einsatz in Brennstoffzellen mit niedrigen und mittleren Arbeitstemperaturbereichen zuerst bei etwa 800°C mit Wasserdampf reformiert (Dampfreformierung), wodurch Wasserstoff für den Betrieb der Brennstoffzelle (und CO₂) entsteht.

Als Alternativen zu den oben genannten chemischen Brennstoffzellen werden in letzter Zeit auch mikrobielle Brennstoffzellen vorgeschlagen, die unter milderen Bedingungen arbeiten und den Abbau von Verbindungen, die bei Aufarbeitung und Abbau von Biomasse, Wirtschaftsdünger und Abwässern entstehen, wie beispielsweise organischen Säuren, wie Ameisensäure, Essigsäure, Propionsäure, Buttersäure, deren Estern und Salzen, Aminosäuren und Saccharinen zur Stromerzeugung nutzen. Zum Teil werden solche Brennstoffzellen auch zur Behandlung und Aufarbeitung von Abwässern benutzt. Als Beispiel kann hier die deutsche Patentschrift DE 10 2013 012 663 B3 genannt werden, die einen Überblick über die generelle Funktionsweise mikrobieller Brennstoffzellen bietet und eine mögliche Nutzung einer Brennstoffzelle zur Filtration von Flüssigkeiten sowie deren Verwendung zur Behandlung und Aufbereitung von Flüssigkeiten beschreibt. Die bekannten mikrobiellen Brennstoffzellen weisen allerdings immer noch viele Schwächen auf in Bezug auf Stromausbeute, Betriebs- und Wartungskosten, die ihre breite und vor allem effiziente Nutzung verhindern. Beispielsweise erfordern die meisten mikrobiellen Brennstoffzellen den Einsatz von edelmetallhaltigen Katalysatoren, in Form einer Beschichtung auf den Elektroden bzw., dass die Elektroden ganz aus solchen Materialien bestehen. Diese Katalysatoren werden mit dem Betrieb der Brennstoffzelle in ihrer Wirkung eingeschränkt, beispielsweise durch Ablagerungen von Stoffwechselprodukten und absterbenden Mikroorganismen und müssen regelmäßig erneuert werden, was zu hohen Betriebskosten führt. Gleiches gilt für die Membranen, die zur Abtrennung der beiden Elektroden eingesetzt werden.

Ferner werden mit Hilfe der bekannten mikrobiellen Brennstoffzellen lediglich die gelösten organischen Rückstände der Gärungs- und Fermentationsprozesse genutzt, die bei der Abwässer- und Biomassenaufarbeitung eingesetzt werden. Gasförmige Rückstände oder Produkte, wie z.B. Biogas, Klärgas, Faulgas oder Deponiegas, umfassend klimaschädliche und/oder toxische Gase wie Methan, Schwefelwasserstoff, Ammoniak werden als regenerative Energiequelle genutzt und verbrannt, wodurch CO₂ als weiteres klimaschädliches Gas entsteht oder durch mikrobiell besetzte Methanoxidationsfilter (DE 202004013278 U1) bzw. Biofilter (DE 102012009234 A1) durchgeleitet, in denen die Gase von Mikroorganismen ohne nutzbare Energiegewinnung abgebaut werden. Kombinationen aus einer Biobrennstoffzelle und einem Biofilter sind aus den Druckschriften KR 2011 0057452 A, KR 2010 0025831 A und US 2012/115045 A1 bekannt.

### Aufgabe der Erfindung

Bei der Aufbereitung und Abbau von Abwässern, Wirtschaftsdünger und Bioabfällen die unter anderem das Aufheizen von Wirtschaftsdüngern und Prozesssubstraten umfassen, entstehen neben gelösten organischen Verbindungen auch Gasgemische, die als Bestandteile umweltschädliche und/oder toxische Gase umfassen, wie z.B. Methan (CH₄) und andere Kohlenwasserstoffe, Schwefelwasserstoff (H₂S), Ammoniak (NH₃), Stickstoff (N₂), Kohlenstoffmonoxid (CO) und Kohlenstoffdioxid (CO₂). Neben schädlichen Wirkungen auf Mensch und Umwelt haben diese Abbauprodukte allerdings zum Teil noch einen hohen Energiegehalt, der von den bekannten Vorrichtungen und Verfahren zur Aufreinigung der Gasgemische nicht genutzt wird.

Es besteht daher Bedarf an alternativen und effizienteren Vorrichtungen und Verfahren zum umweltfreundlichen Abbau von solchen und weiteren unerwünschten Gasen aus Gasgemischen.

### Erfindungsgemäße Lösung

Diese Aufgabe wird gelöst durch eine Vorrichtung zum Abbau von Gasen aus Gasgemischen und Erzeugung von elektrischem Strom nach Anspruch 1 umfassend:
(a) eine Biobrennstoffzelle; und
(b) einen Biofilter;
wobei die Biobrennstoffzelle und die mikrobielle Emissionssenke derart miteinander verbunden sind, dass zumindest Gase zwischen ihnen zirkulieren können und Substanzen von dem Biofilter der Biobrennstoffzelle zugeführt werden können. Die Begriffe Abbau und Umbau werden im Rahmen der vorliegenden Beschreibung zum Teil austauschbar füreinander benutzt, da der Abbau der Gase letztendlich nicht zu deren vollkommenen Verschwinden, sondern zum Umbau in andere, weniger schädliche oder erwünschte Verbindungen führt. In einer bevorzugten Ausführungsform sind die Biobrennstoffzelle und die mikrobielle Emissionssenke in der Vorrichtung derart miteinander verbunden, dass sowohl Gase als auch Flüssigkeiten zwischen beiden zirkulieren können. Besonders bevorzugt wird die Verbindung zwischen den beiden Hauptbestandteilen (a) und (b) der erfindungsgemäßen Vorrichtung derart gestaltet, dass sowohl Gase als auch Flüssigkeiten aus dem Biofilter in die Biobrennstoffzelle und zumindest Gase aus der Biobrennstoffzelle in den Biofilter übertreten können. Im Folgenden werden die Bezeichnungen mikrobielle Emissionssenke, Emissionssenke und Biofilter austauschbar füreinander benutzt.

Die erfindungsgemäße Vorrichtung baut unerwünschte Gase als Bestandteile von Gasgemischen, bevorzugt von Biogas ab, wobei es sich bei den Gasbestandteilen bevorzugt um Gase handelt aus der Gruppe umfassend: Schwefelwasserstoff, Ammoniak, Kohlenstoffdioxid, Kohlenstoffmonoxid sowie Kohlenwasserstoffe und darunter Methan. Für das Klima als besonders relevant gelten hierbei Methan und weitere Kohlenwasserstoffe, Ammoniakgas ist besonders geruchsintensiv, in niedrigen Konzentrationen reizend, in höheren toxisch und Schwefelwasserstoff stellt das giftigste der Gase dar.

Der Abbau der unerwünschten Bestandteile von Gasgemischen wie Biogas erfolgt bevorzugt in der erfindungsgemäßen mikrobiellen Emissionssenke. In einer Ausführungsform umfasst die erfindungsgemäße Emissionssenke eine Aufschüttung von Aufwuchskörpern und darauf aufgebrachte Mikroorganismen, die bevorzugt auf dem großflächigen Material immobilisiert sind.

Gasgemische, deren Bestandteile abgebaut werden sollen, werden durch den Biofilter durchgeleitet, so dass sie durch ihn durchfließen. Um den Gasdurchfluss und Aufenthaltsdauer durch und im Biofilter zu steuern und auch kontrollierte, optimale Umgebungsbedingungen für die auf dem Filtermaterial befindlichen Mikroorganismen zu gewährleisten, befindet sich die erfindungsgemäße Filtermaterialaufschüttung samt darauf befindlicher Mikroorganismen bevorzugt in einem Gehäuse. Das Gehäuse ist bevorzugt gas- und flüssigkeitsdicht. Für eine Zu- und/oder Ableitung von Feststoffen, Flüssigkeiten und/oder Gasen sind an dem Gehäuse geeignete Öffnungen und Zuführungen angebracht. Diese sind bevorzugt abschließbar und abdichtbar, bzw. im geschlossenen Zustand dicht gegenüber ungewolltem Ein- und/oder Austritt von Feststoffen, Flüssigkeiten und/oder Gasen. Die Zu- und Abführungsöffnungen werden bevorzugt in unterschiedlichen Größen und Ausführungsformen bereitgestellt, abhängig davon, welche Substanzen durch diese ein und/oder ausgeleitet werden sollen. So wird in einer Ausführungsform ein Gehäuse für den Biofilter bereitgestellt, das getrennte Zu- und Abführungsmöglichkeiten für gasförmige, flüssige und/oder feste Substanzen sowie deren Übergangsformen (wie z.B. Gele oder Aerosole) enthält. Bei der Steuerung der Umgebungsbedingungen im Biofilter wird dabei darauf geachtet, dass die Feuchtigkeit des Filtermaterials, Temperatur und der pH-Wert in einem für die Mikroorganismen optimalen Bereich gehalten werden. Hierzu wird beispielsweise das Filtermaterial in einem feuchtem Zustand gehalten. Dazu wird das Aufwuchsmaterial bevorzugt bereits im feuchten Zustand in den Biofilter eingeführt und/oder während des Betriebes der mikrobiellen Emissionssenke befeuchtet, indem beispielsweise Flüssigkeit dem Aufwuchsmaterial zugeführt wird. Die Zuführung von Flüssigkeit zu dem Aufwuchsmaterial erfolgt bevorzugt bevor oder wenn die Feuchtigkeit des Aufwuchsmaterials unter das für die dort angesiedelten Mikroorganismen optimale Ausmaß fällt. Zur Bestimmung des Zeitpunkts an dem Flüssigkeit dem Aufwuchsmaterial zugeführt werden soll, können in dem Biofilter Sensoren untergebracht werden, die den Feuchtigkeitsgehalt der darin enthaltenen Gase messen. Zur Befeuchtung des Aufwuchsmaterials ist eine zur Abgabe von Flüssigkeiten geeignete Befeuchtungsvorrichtung in dem Biofilter angebracht, wobei diese bevorzugt oberhalb der Aufwuchsmaterialaufschüttung angebracht ist. Bevorzugt erfolgt die Flüssigkeitsabgabe derart, dass die Flüssigkeit dabei in feinen Tropfen verteilt, nebelartig versprüht bzw. zerstäubt wird, wie zum Beispiel durch eine Sprinkler- oder Zerstäubungsanlage. Zur Abführung überschüssiger Flüssigkeit, wie z.B. an den Gehäusewänden kondensierender Flüssigkeiten und/oder von Flüssigkeiten, die von den Aufwuchskörpern abfließen und sich am Boden des Gehäuses sammeln können ferner Abflussöffnungen in dem Gehäuseboden enthalten sein. Die Zu- und/oder Abführung von Gasen und Flüssigkeiten kann dabei durch Pumpen unterstützt erfolgen.

Als Aufwuchsmaterialien werden bevorzugt Materialien eingesetzt, die eine große spezifische Oberfläche und damit eine große Aufwuchsfläche für die darauf aufzubringenden, erfindungsgemäßen Mikroorganismen aufweisen. Ferner sollen diese Materialien bevorzugt Feuchtigkeit gut speichern können, einen geringen Druckverlust beim Durchströmen der durchgeleiteten Gase verursachen, eine gewisse Pufferkapazität gegen pH-Wert Schwankungen aufweisen, ein gleichmäßiges Durchströmen des Aufwuchses ermöglichen und/oder eine geringe Verrottungsgeschwindigkeit haben. Mögliche Aufwuchsmaterialien werden ausgewählt aus der Gruppe umfassend Holz, Bambus, Kokosfasern, Kunststoff, offenzellige Schaumstoffe und Vulkangestein. Bevorzugt wird als Aufwuchsmaterial organisches Material, bzw. Material pflanzlichen Ursprungs eingesetzt, da diese die genannten Anforderungen am besten erfüllen. Hierbei werden organische Materialien pflanzlichen Ursprungs mit besonders hohem Ligninanteil besonders bevorzugt. Holz, als eines der pflanzlichen Materialien mit dem höchsten Ligninanteil ist somit das Material, das besonders bevorzugt als Aufwuchsmaterial eingesetzt wird. Ebenfalls bevorzugt für diesen Einsatz sind Gitterkugeln (Außendurchmesser bevorzugt 3-30 cm, und besonders bevorzugt 4-12 cm) aus Kunststoff mit angerauten Oberflächen in hohler Ausführung, wobei ein Teil des Innenvolumens (20-30 %) aus Aktivkohle beschichteten, offenporigem Schaumstoff besteht.

Um eine möglichst große Oberfläche zur Beströmung mit den durchgeleiteten Gasgemischen zu bieten wird das Aufwuchsmaterial bevorzugt zerkleinert, bzw. in einer Größe mit einem Querschnitt zwischen etwa 1cm² bis etwa 20cm², bevorzugt zwischen etwa 3cm² bis etwa 10cm² in den Biofilter eingebracht. Das Maß der beiden Siebe beträgt dabei > 2 cm² bis < 5 cm². Der Biofilter kann Aufwuchsmaterial mit annähernd gleicher Größe enthalten, oder Aufwuchsmaterial in unterschiedlichen Größen. Für die Ansiedlung der erfindungsgemäßen Mikroorganismen in dem Biofilter ist es von Vorteil, wenn die zu besiedelnden Oberflächen ein möglichst feuchtes Milieu bieten. Ist das Aufwuchsmaterial pflanzlichen Ursprungs, so wird es hierzu bevorzugt möglichst bald nach der Zerkleinerung, in noch feuchtem Zustand im Biofilter aufgeschüttet. Alternativ oder zusätzlich, insbesondere bei Aufwuchsmaterial nicht-pflanzlichen Ursprungs wird das Aufwuchsmaterial auch in der aufgeschütteten Form in dem Biofilter befeuchtet. Eine geeignete Flüssigkeit, wie zum Beispiel Wasser, kann hierzu über das aufgeschüttete Aufwuchsmaterial derart gegeben werden, dass sie über das Aufwuchsmaterial möglichst gleichmäßig verteilt wird. Die Befeuchtung des Aufwuchsmaterials kann einmal oder mehrfach stattfinden, wobei die Zeitpunkte, zu denen die Befeuchtung stattfinden soll durch Messungen des Feuchtigkeitsgehaltes des Gasgemisches in dem Biofilter, bzw. in dem diesen umfassenden Gehäuse bestimmt werden kann. Die Befeuchtung wird bevorzugt dann eingeleitet, falls die gemessene Luftfeuchtigkeit als ungeeignet befunden wird für die Lebensfähigkeit und insbesondere für die Fähigkeit der in dem Biofilter enthaltenen Mikroorganismen, die abzubauenden Bestandteile der eingeleiteten Gaszusammensetzungen abzubauen.

Wird Holz als Aufwuchsmaterial eingesetzt, so kann dieses auf verschiedene Arten zerkleinert werden. Bevorzugt wird Holz, das mit schneidenden Werkzeugen erzeugt wurde, welches auch als Hackschnitzel bezeichnet wird, oder Holz, das mit stumpfen, zertrümmernden Werkzeugen zerkleinert wurde, welches auch als Schredderholz bezeichnet wird. Der erfindungsgemäße Biofilter kann Holz enthalten, dass nur auf eine Weise zerkleinert worden ist also beispielsweise nur Hackschnitzel oder nur Schredderholz, oder es sind Holzstücke enthalten, die auf verschiedene Art und Weise zerkleinert worden sind.

Die zu reinigenden Gasgemische werden bevorzugt derart in den Biofilter eingebracht, dass sie ein möglichst großes Volumen des aufgeschichteten Aufwuchsmaterials durchfließen müssen, bevor sie in die Brennstoffzelle übertreten können, bzw. aus dem Gehäuse des Biofilters wieder abgeleitet werden. Hierzu werden die zu reinigenden Gasgemische innerhalb der Aufschüttung von Aufwuchsmaterial in den Biofilter abgegeben. Dieses erfolgt bevorzugt dadurch, dass eine oder mehrere Zuführungen bzw. Zuleitungen in das Gehäuse des Biofilters hineinragend gelegt wird, wobei die eine oder mehrere Zuleitungen derart in das Biofiltergehäuse hineinragen, dass sie von dem aufgeschütteten Aufwuchsmaterial umgeben sind. Bevorzugt befindet sich dabei der größere Anteil des aufgeschütteten Aufwuchsmaterials oberhalb der einer oder mehrerer, bzw. der mindestens einer Zuleitung für zu reinigende Gasgemische. Zur Abgabe der zu reinigenden Gasgemische befinden sich auf der Zuleitung eine oder mehrere Öffnungen. Bevorzugt sind diese Öffnungen abdichtbar bzw. abschließbar gestaltet, so dass der Zu- bzw. Austritt von Gasen, bzw. Gasgemischen und von Substanzen in anderen Aggregatzuständen, wie z.B. Flüssigkeiten aus diesen Öffnungen kontrolliert werden kann. Eine solche Kontrolle kann beispielsweise durch Ausstattung der Öffnungen mit Ventilen erfolgen. In einer Ausführungsform erfolgt durch die eine oder mehrere Zuleitungen die Einleitung der zu reinigenden Gasgemische in den Biofilter, während die Abführung des gereinigten Gasgemisches durch eine andere Öffnung in dem Biofiltergehäuse oder in dem damit verbundenem Brennstoffzellengehäuse erfolgt. In einer anderen Ausführungsform erfolgt sowohl die Zuführung der zu reinigenden Gasgemische wie die Abführung des gereinigten Gasgemisches durch die gleiche Zuleitung.

Zum Betrieb der erfindungsgemäßen Vorrichtung enthaltend Biofilter und Biobrennstoffzelle werden diese beiden zunächst derart aufgebaut, das deren hierin beschriebenen Bestandteile ihrer jeweiligen Funktion gemäß in den jeweiligen Gehäusen oder in einem Gehäuse untergebracht sind. Insbesondere ist hierbei das feuchte Aufwuchsmaterial und die darauf anzusiedelnden Mikroorganismen in dem Biofiltergehäuse untergebracht, sowie der Elektrolyt, die Elektroden mit der Drahtverbindung und die dort einzusetzenden Mikroorganismen in dem Biobrennstoffzellengehäuse vorhanden. Über dem Aufwuchsmaterial und der Elektrolytenoberfläche befindet sich zunächst Sauerstoff oder sauerstoffhaltige Luft.

Die oben gestellte Aufgabe wird ebenfalls gelöst durch ein Verfahren nach Anspruch 13 zur Reinigung von Gasgemischen und zur Erzeugung von elektrischem Strom in der erfindungsgemäßen Vorrichtung umfassend folgende Schritte:
(a) Einleitung des zu reinigenden Gasgemisches durch den Biofilter;
(b) Inkubation des Gasgemisches in der Vorrichtung; und
(c) Einleitung sauerstoffhaltiger Luft oder Sauerstoff durch die Biobrennstoffzelle bei gleichzeitiger Abführung des gereinigten Gasgemisches aus der Vorrichtung.

Schritte (a) und (c) können dabei auch gleichzeitig stattfinden.

Um einen Luftstrom in der erfindungsgemäßen Vorrichtung und ihren Bestandteilen zu erhalten wird die Abführung des gereinigten Gasgemisches bevorzugt durch eine Öffnung/Abführung in dem Biofilter durchgeführt. Anschließend können die obigen Verfahrensschritte zyklisch wiederholt werden bis beispielsweise das zu reinigende Gasgemisch aufgebracht ist. Die Inkubation mit dem Gasgemisch wird für eine Inkubationszeit von etwa 5 bis 60 Minuten, bevorzugt für etwa 10 bis 30 Minuten, besonders bevorzugt für etwa 20 Minuten durchgeführt (Inkubationszeit).

Zur Befeuchtung des Aufwuchsmaterials wird in einer Ausführungsform nach Bedarf nach der Sauerstoffdusche (Schritt (c)) der Schritt eingefügt von:
(d) Befeuchtung des Aufwuchsmaterials in dem Biofilter.

Nach der Befeuchtung wird das Reinigungsverfahren wieder bei Schritt (a) aufgenommen. Zur Einleitung und Ausleitung von Gasen und Flüssigkeiten in die erfindungsgemäße Vorrichtung bzw. in ihre Bestandteile ist bevorzugt eine oder mehrere Regeleinrichtungen vorhanden, die die Mengen, Geschwindigkeiten der Ein-/Ableitung und die Zeiten zu denen diese erfolgen steuern. Die Regeleinrichtungen sind dazu bevorzugt beispielsweise an die oben erwähnten Sensoren zur Feuchtigkeitsmessung im Inneren der Vorrichtung angeschlossen.

Die zu reinigenden Gasgemische werden gemäß der vorliegenden Erfindung bevorzugt unter Beteiligung von Mikroorganismen gereinigt, wobei die Reinigung durch den Abbau der unerwünschten Bestandteile der Gasgemische hauptsächlich während des Inkubationsschrittes erfolgt. Der Abbau dieser unerwünschten Bestandteile, bzw. Gase kann vollständig in dem Biofilter oder zum Teil im Biofilter und zum Teil in der daran angeschlossenen Biobrennstoffzelle erfolgen. Der Ausdruck "zum Teil" soll hierbei ausdrücken, dass Teilmengen eines oder mehrerer unerwünschten Gase in jeweils einem Teil der erfindungsgemäßen Vorrichtung, also in dem Biofilter oder der Biobrennstoffzelle erfolgen kann, oder dass der Abbau stufenweise erfolgt, indem das abzubauende Gas zunächst in einem Teil der erfindungsgemäßen Vorrichtung in ein Zwischenprodukt, wie beispielsweise eine andere chemische Verbindung, umgewandelt wird und der weitere Abbau dieses Zwischenprodukts in dem jeweils anderem Teil der erfindungsgemäßen Vorrichtung erfolgt.

In einer bevorzugten Ausführungsform umfasst die erfindungsgemäße mikrobielle Emissionssenke demgemäß:
(i) zerkleinertes Holz; und
(ii) Mikroorganismen.

Die Funktion der MO im Biofilter dient der Stabilisierung und Vervollständigung der Bioprozesse. Die Ursache dafür liegt entweder in der schweren Abbaubarkeit und inhibierenden Wirkung der Abluftinhaltsstoffe oder an den langsamen Wachstumsraten der abbaurelevanten aktiven Mikroorganismen. Durch die immobilisierende Wirkung der MO an der Oberfläche der natürlichen und synthetischen Träger kommt es zur Biofilm-Bildung. Die so immobilisierten Zellen weisen mehrere Vorteile auf: Sie sind stabiler gegenüber toxischen, bzw. inhibierenden Stoffen bzw. Belastungsschwankungen und ermöglichen eine höhere Raum-Zeit-Ausbeute.

Bevorzugt umfasst der erfindungsgemäße Biofilter dabei eines oder mehrere Mikroorganismen ausgewählt aus der Gruppe umfassend:
(a) aerobe methanoxidierende Mikroorganismen;
(b) anaerobe methanoxidierende Mikroorganismen;
(c) schwefeloxidierende Mikroorganismen;
(d) sulfatreduzierende Mikroorganismen, insbesondre aus der Familie der Desulfobulbaceae;
(e) Milchsäurebakterien darunter bevorzugt die *Lactobacillales;*
(f) Schimmelpilze darunter bevorzugt Pilze aus der Gattung der Pinselschimmel;
(g) CO-abbauende Mikroorganismen;
(h) biolumineszierende Mikroorganismen;
(i) aerobe und anaerobe denitrifizierende Mikroorganismen; und
(j) Oxidierende Archaebakterien.

Die Auswahl der Organismen für die Ansiedlung in dem Biofilter hängt dabei von der Zusammensetzung der durchzuleitenden Gasgemische ab, bzw. von den Gasen, die in dem Biofilter abgebaut werden sollen.

In einer bevorzugten Ausführungsform umfasst der erfindungsgemäße Biofilter mindestens jeweils einen Mikroorganismus aus jeweils jeder der oben genannten Untergruppen (a) bis (j). Dieses ist von Vorteil, um einen möglichst umfassenden Abbau unerwünschter Gase aus eingeleiteten Gasgemischen zu gewährleisten und so die erfindungsgemäße Vorrichtung auch möglichst flexibel handhaben zu können bei beispielsweise bezüglich der enthaltenen Gase oder deren Mengen variierenden Zusammensetzung des eigeleiteten Gasgemisches.

In einer besonders bevorzugten Ausführungsform umfasst der erfindungsgemäße Biofilter als Vertreter der oben genannten Mikroorganismen-Untergruppen die folgenden Mikroorganismen:
*Methylomonas* (Methanotroph, Proteobacteria)
*Methylobacter* (Methanotroph, Proteobacteria)
*Methylococcus.* (Methanotroph, Proteobacteria)
*Methylosinus* (Methanotroph, Proteobacteria)
*Methylocella* (Acidophil, methanotroph, Proteobacteria)
Methylacidiphilium (Acidophil, methanotroph, *Verrucomicbiaceae*), genutzte Substrate dieser methylothrophen Bakterien sind z.B.: Methan, Formiat, Methanol, Formamind, Methylamid, Kohlenmonoxid, Dimethylamin Dimethylether, Trimethylamid, Dimethylcarbonat Tetramethylammonium, Dimethylsulfoxid, Trimethylamin-N-Oxid, Dimethylsulfid, Trimethyllsulfonium, Chlormethan, Oxidierte aber nicht für das Wachstum benötigte Substrate: Ammonium, Brommethan, Ethylen, Höhere Kohlenwasserstoffe (Ethan, Propan)
*Chlorobium limicola* (Schwefelwasserstoff- und Schwefel- oxidierend);
*Thermodesulfobacterium sp*.(sulfatreduzierend);
*Lactobacillus casei* (Milchsäurebakterium);
*Penicillium roqueforti* (Schimmelpilz); zur Stabilisierung der mikrobiellen Lebensgemeinschaft;
*Rhodospirillium rubrum* (CO-abbauend);
*Aliivibrio fischeri* (Proteobakterium; Lumineszierend);
*Spirullina platensis* (Alge, produziert essentielle Aminosäuren);
*Nitrosopumils maritimus* (Ammoniak-oxidierend); sowie
Pseudomonas stutzeri (Denitrifizierer, fakultativ anaerob). Er ist geeignet und wird wegen seiner denitrifizierender Wirkung und wegen der Eignung zum Abbau schwieriger organischer Substanzen eingesetzt.

Die in dem Biofilter eingesetzten Mikroorganismen werden bevorzugt vor der Einleitung der zu reinigenden Gasgemische auf dem aufgeschichteten Aufwuchsmaterial aufgebracht (angeimpft) und dort immobilisiert. Die Aufbringung der Mikroorganismen kann hierbei beispielsweise mit den oben beschriebenen Mitteln erfolgen, die zur Auftragung von Flüssigkeiten über das aufgeschüttete Aufwuchsmaterial eingesetzt werden. Die Immobilisierung erfolgt dadurch, dass die Mikroorganismen einen Biofilm auf der Oberfläche des Aufwuchsmaterials bilden, in dem sie vorliegen und besser an besagter Oberfläche haften. Biofilme und ihre Eigenschaften sind weiter unten genauer beschrieben.

Durch die erfindungsgemäß eingesetzten Mikroorganismen ist unter anderem der Abbau verschiedener unerwünschter gasförmiger Bestandteile von Gasgemischen umfassend beispielsweise Methan, Kohlenstoffdioxid, Kohlenstoffmonoxid, Kohlenwasserstoffe, Ammoniak und Schwefelwasserstoff möglich, einer Zusammensetzung also, die der von Gasgemischen entspricht, welche häufig in Gülle-Aufheiztanks entstehen.

Eines der Gase, die in der erfindungsgemäßen Vorrichtung abgebaut werden kann ist Methan. Der Methanabbau erfolgt hierbei durch Mikroorganismen, die in dem Biofilter und/oder in der Biobrennstoffzelle enthalten sind.

Hierzu werden im Biofilter aerobe und anaerobe Methanoxidierende Bakterien, bzw. Bakterienkonsortien angesiedelt, die Methan aerob, bzw. anaerob abbauen.

Ohne an eine Theorie gebunden sein zu wollen werden nachfolgend beispielhafte Wege beschrieben, wie der Abbau der beispielhaft angeführten unerwünschten Gase in der erfindungsgemäßen Vorrichtung bzw. in ihren Bestandteilen erfolgt.

Der mikrobielle Abbau von Methan und anderen Kohlenwasserstoffen erfolgt aerob über die folgende Bilanzgleichung:

CH₄ +2O₂ → CO₂ +2H₂O

Unter Verwendung von Sulfat als Elektronenakzeptor für die anaerobe Methanoxidation ergibt sich folgende Bilanzgleichung:

CH₄ + SO₄²⁻ + 2H⁺ → CO₂ +H₂S +2H₂O

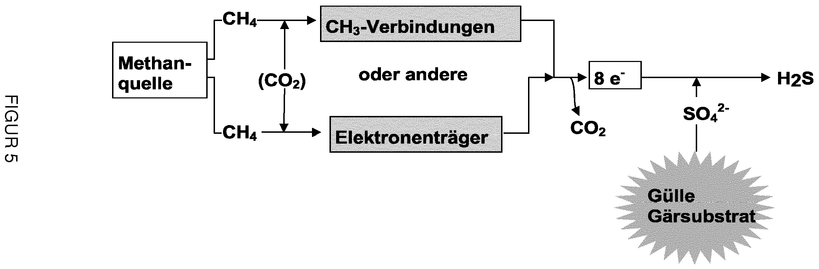

Hierbei wird die Konzentration des Sulfates möglichst niedrig gehalten, um die Oxidationsreaktion des Methans zu betreiben. Der anaerobe Abbau von Methan erfolgt über das Zusammenspiel von oxidierenden Archaebakterien und sulfatreduzierenden Bakterien, die Konsortien bilden und hierdurch die anaerobe Oxidation von Methan betreiben können, wie schematisch in Figur 5 dargestellt. Bei der anaeroben Methanoxidation werden organische Verbindungen gebildet, darunter auch Acetat bzw. Essigsäure. Ferner entsteht hierbei auch Wasserstoff.

Kohlenstoffmonoxid wird beispielsweise von CO-metabolisierenden (abbauenden) Mikroorganismen abgebaut, wie *Rhodospirillum rubrum,* welches Kohlenstoffmonoxid nach der folgenden Bilanzgleichung abbaut:

CO + H₂O → CO₂ + H₂

Andere Gasbestandteile werden zum Teil durch Reaktionen mit dem Sauerstoff und dem Wasser, das Bestandteil der zur Befeuchtung eingesetzten Flüssigkeit ist, abgebaut, die sich ebenfalls in der erfindungsgemäßen Vorrichtung befinden.

So wird beispielsweise Schwefelwasserstoff durch Reaktion mit der sauerstoffhaltigen Luft abgebaut. Schwefelwasserstoff entsteht beispielsweise durch das Erwärmen der Gülle. Hierbei wird Ammoniak freigesetzt und der pH-Wert reduziert. Daraus resultierend wird Sulfid gelöst und als H₂S freigesetzt Bei der teilweisen Entleerung des Biofilters wird Sauerstoff oder sauerstoffhaltige Luft (Sauerstoffspülung) durch die Elektrolytkammer des Biofilters gespült. Daraus ergibt sich für Schwefelwasserstoff die folgende Bilanzgleichung:

2H₂S + 3O₂ → 2H₂O + 2SO₂ (Schwefeldioxid)

Ferner wird bei der Sauerstoffspülung aus dem gelösten Ammoniak Salpetersäure. Gemeinsam mit der bei der Methanoxidation entstehenden Essigsäure senken sie den pH-Wert von ca. 8,0 auf <6,5, dabei geht der Ammoniakverlust gegen Null:

NH₃ +1 ½ O₂ → HNO₂+H₂O; HNO₂ + ½ O₂ → HNO₃ (Salpetersäure)

Die dabei entstehenden, gelösten Nitrat- und Nitritionen werden anschließend von den aeroben und anaeroben denitrifizierenden Organismen zu Stickstoff abgebaut.

Der Abbau von Ammoniak erfolgt zum Teil in dem Biofilter und zum Teil in der Biobrennstoffzelle, wo er in gleicher Weise erfolgt, wobei die Nitrationen zusammen mit der Essigsäure dort die Leitfähigkeit des Elektrolyten gewährleistet.

Kohlenstoffdioxid wird in der erfindungsgemäßen Vorrichtung durch Konvertierung abgebaut, die genauer weiter unten, bei der Beschreibung der Biobrennstoffzelle dargelegt ist.

Der anschließende Abbau von Schwefeldioxid und der Salpetersäure, bzw. der Nitrate und Nitrite erfolgt beispielsweise durch von Konsortien aus sulfatreduzierenden und denitrifizierenden Bakterien. Hiervor erfolgt zum Teil oder vollständig eine Oxidation von Schwefelwasserstoff zu Sulfat in dünnen Flüssigkeitsschichten, also auf dem aufgeschütteten Aufwuchsmaterial, durch Ausnutzung von Reaktionen, die ähnlich bei der Entstehung vom sauren Regen stattfinden, beschleunigt durch die Beteiligung vom gelösten Ammoniak (oder von H₂O₂, O⁻₂, OH⁻, HSO₃²⁻, SO₄²⁻, H₃COOH, O₃, HO₂, NO⁻₂, NO⁻₃, NH⁺₄ oder NH⁻₂).

Durch den Wasserstoffdruck und den Druck der eingeleiteten Gasgemische wird der im Biofilter entstehende Wasserstoff mitgerissen und mit diesem, bzw. mit dem Gasgemisch auch die Essigsäure durch die Verbindung zwischen dem Biofilter und der Brennstoffzelle in die letzte geleitet. Dort angelangt werden der Wasserstoff und das Acetat/Essigsäure von den in der Brennstoffzelle vorhandenen Organismen zur Stromproduktion benutzt.

Der hier bereitgestellte Biofilter wird bevorzugt in der erfindungsgemäßen Vorrichtung in Kombination mit der Biobrennstoffzelle betrieben. In einer Ausführungsform der vorliegenden Erfindung wird aber auch ein Biofilter bereitgestellt, der ohne die Biobrennstoffzelle betrieben wird. Hierzu erfolgt die Zuführung von Luft oder Sauerstoff nicht durch die Biobrennstoffzelle sondern durch geeignete Öffnungen oder Zuführungen direkt in den Biofilter.

Neben dem Biofilter ist ein anderer Teil der erfindungsgemäßen Vorrichtung die Biobrennstoffzelle.

In einer bevorzugten Ausführungsform umfasst die erfindungsgemäße Biobrennstoffzelle:
(i) eine Anode;
(ii) eine Kathode;
(iii) einen leitenden Draht, der die Anode und die Kathode verbindet; und
(iv) einen wässrigen Elektrolyten;
wobei die Anode und die Kathode in den Elektrolyten eingetaucht sind, der leitende Draht überwiegend außerhalb des Elektrolyten verläuft und wobei ferner auf der Anodenoberfläche exoelektrogene Mikroorganismen immobilisiert sind.

Wird keine Last an die Brennstoffzelle angelegt, bzw. kein Strom abgeleitet, könnte der in der Brennstoffzelle vorhandene Wasserstoff mit dem Saurestoff gegebenenfalls anstatt über die Redoxreaktionen an den Elektroden direkt in einer Knallgasreaktion explodieren. Um dieses zu vermeiden enthält in einer Ausführungsform die erfindungsgemäße Brennstoffzelle daher ferner
(v) einen Lastwiderstand zwischen der Anode und der Kathode,
oder die Zelle wird ständig unter zumindest kleiner Last bzw. bei Stromabführung betrieben. Der Draht, der den Biofilter mit der Brennstoffzelle verbindet besteht aus Metallen, bevorzugt dabei aus Metallen, die widerstandsfähig gegen die im Elektrolyten enthaltenen Säuren sind, wie Beispielsweise aus Platin.

Die Biobrennstoffzelle der vorliegenden Erfindung basiert unter anderem auf der Fähigkeit exoelektrogener Mikroorganismen wie z.B. *Desulfobulbaceae,* Elektronen in Rahmen ihres Stoffwechsels an extrazelluläre Substrate, zumeist Eisen oder Manganverbindungen (Fe(III), bzw. Mn(III/IV)) zu übertragen. Da Sauerstoff ein im Vergleich stärkeres Oxidationsmittel ist, kann eine Elektronenübertragung auf diese oder alternative Substrate, wie sie bevorzugt bei der vorliegenden Erfindung benutzt werden, nur unter anaeroben Bedingungen stattfinden.

Um einen möglichst hohen Elektronenfluss zu erreichen sieht es die vorliegende Erfindung vor, die Anodenfläche, auf der die exoelektrogenen Mikroorganismen angesiedelt sind, möglichst groß zu gestalten. Hierzu werden mehrere Mittel eingesetzt. Zum einen wird die erfindungsgemäße Anode in ihren äußeren Abmessungen möglichst groß gewählt. Bevorzugt ist die erfindungsgemäße Anode daher flächenähnlich ausgestaltet, d.h. in Bezug auf ihre Geometrie sind die Länge und die Breite der erfindungsgemäßen Anode vielfach größer als ihre Dicke. Geometrische Beispiele der bevorzugten Anodenform gemäß der vorliegenden Erfindung sind flächenartige Formen, wie sie beispielsweise bei mattenförmigen Ausgestaltungen benutzt werden. In einer bevorzugten Ausführungsform wird daher die Biobrennstoffzelle gemäß der vorliegenden Erfindung bereitgestellt, wobei die Anode eine Mattenform aufweist.

Um die Oberfläche weiter zu vergrößern, ist es in einer Ausführungsform der erfindungsgemäßen Biobrennstoffzelle vorgesehen, die flächenartige Form der erfindungsgemäßen Anode nicht in einer planen Anordnung zu belassen, sondern sie einfach oder mehrfach zu biegen, falten und/oder zu verdrehen bzw. sie in einer solchen, gebogenen, gefalteten und/oder verdrehten Form herzustellen, falls sie nicht flexibel genug ist, um unbeschadet nach der Herstellung in eine solche Form gebracht zu werden, so dass auch Anoden mit Maßen, die in dem planen Zustand die Abmessungen der jeweils eingesetzten Biobrennstoffzelle an sich übertreffen würden, in dieser untergebracht werden können. Wird die Anode aus der planen Anordnung herausgebracht, so wird die Veränderung der dreidimensionalen Konformation durch biegen, falten und/oder verdrehen, wie oben beschrieben, bevorzugt derart vorgenommen, dass der Elektrolyt jederzeit Zugang zu der gesamten Anodenoberfläche hat.

Für eine noch weitere Oberflächenvergrößerung der Anode ist es alternativ oder zusätzlich zu den obigen beiden Maßnahmen vorgesehen, dass in einer bevorzugten Ausführungsform die Anode aus einem offenporigem Trägermaterial besteht, so dass noch mehr Mikroorganismen auf der Anode untergebracht werden können.

Das Trägermaterial, aus dem die Anode besteht, kann gemäß der vorliegenden Erfindung frei gewählt werden, solange es eine Besiedlung durch die erfindungsgemäß eingesetzten, weiter unten aufgeführten Mikroorganismen zulässt, indem es beispielsweise keine toxische oder abstoßende Wirkung auf die erfindungsgemäßen Organismen hat und durch ihre Oberflächenstruktur eine möglichst feste Anbindung der Mikroorganismen zulässt. Weiterhin muss das Trägermaterial der Anode elektrisch leitfähig sein. Eine weitere Voraussetzung ist eine mechanische und chemische Stabilität des Trägermaterials, die dessen möglichst lange Haltbarkeit in der Elektrolytlösung unter den Betriebsbedingungen in der erfindungsgemäßen Brennstoffzelle gewährleistet. Bevorzugt werden hierbei Materialien eingesetzt, die erst nach längerem Betrieb, also beispielsweise nach einem Monat, oder ein paar Monaten, in der erfindungsgemäßen Brennstoffzelle erste Zeichen der Zersetzung zeigen, die zur reduzierten Stromproduktion durch die Zelle im Vergleich zu der Produktion bei der ersten Inbetriebnahme mit dieser Anode führen. Die Steifigkeit und/oder Festigkeit der Anode kann gemäß der vorliegenden Erfindung relativ frei gewählt werden, solange die Anode, wenn sie in einer nicht planen, also beispielsweise gefalteten, gebogenen oder verdrehten Form vorliegt, diese Form auch behält. Um die Anode mechanisch zu festigen, kann diese alternativ oder zusätzlich mittels Materialien von größerer Steifigkeit und/oder Festigkeit eingefasst werden. In einer bevorzugten Ausführungsform wird daher erfindungsgemäße Biobrennstoffzelle bereitgestellt, wobei die Anode in einer Gitterkonstruktion eingefasst ist. Bevorzugt besteht die Gitterkonstruktion dabei aus Kunststoff.

Die elektrische Leitfähigkeit kann dem Trägermaterial inhärent sein, oder sie kann durch weitere Maßnahmen erreicht werden, wie beispielsweise Dotierung und/oder Beschichtung mit elektrisch leitfähigen Substanzen.

Aufgrund der oben beschriebenen Formvorgaben für die Anode der vorliegenden Erfindung werden als Trägermaterial bevorzugt Kunst- bzw. Polymerwerkstoffe eingesetzt.

Als Polymerwerkstoffe können leitfähige oder nicht leitfähige Werkstoffe gewählt werden. Geeignete leitfähige Polymerwerkstoffe umfassen Polythiophen, Polypyrrol und Polyanilin. Nicht-leitfähige, für die Herstellung der erfindungsgemäßen Anode geeignete Polymerwerkstoffe umfassen Polypropylen (PP) und Polyurethan (PUR), PVC-U; PE-HD; PTFE; PCTFE; PVF; und Duroplaste wie PF-GF; EP-GF. Da selbst die Leitfähigkeit der leitfähigen Polymerwerkstoffe in Vergleich zu guten Leitern, wie z.B. Silber, Kupfer und Gold oder selbst zu Graphit in der Regel niedriger ausfällt, werden für die Anode der vorliegenden Erfindung Polymerwerkstoffe bevorzugt, die mit elektrisch leitfähigen Materialien beschichtet sind, unabhängig von der Leitfähigkeit des Polymers an sich. In einer bevorzugten Ausführungsform wird daher eine Biobrennstoffzelle gemäß der vorliegenden Erfindung bereitgestellt, wobei die Anode aus einem offenporigem Trägermaterial besteht, der bevorzugt einen Polymerwerkstoff und einen elektrisch leitenden anorganischen Werkstoff als Beschichtung umfasst. Der Polymerwerkstoff wird in einer Ausführungsform ausgewählt aus der Gruppe umfassend Polythiophen, Polypyrrol, Polyanilin, Polypropylen, und Polyurethan (PUR).Besonders bevorzugt wird als Polymerwerkstoff halbharter Polyurethan (PUR) eingesetzt.

Als geeignete Beschichtungsmaterialien für die erfindungsgemäß eingesetzte Anode werden Stoffe eingesetzt, die elektrisch leitfähig sind, mit der Einschränkung, dass die oder der Beschichtungsstoff ebenfalls wie das Trägermaterial biokompatibel sein müssen, d.h. ebenfalls eine Besiedlung mit den erfindungsgemäßen Mikroorganismen zulassen müssen und sich nicht nachteilig auf deren Lebens- und Vermehrungsfähigkeit auswirken. Hierzu geeignet sind Materialien umfassend aber nicht beschränkt auf Edelmetalle und elektrisch leitfähige Keramiken und Kohlenstoffformen. Von den Edelmetallen werden bevorzugt Metalle der Platingruppe, wie Platin, Palladium, Ruthenium oder deren Legierungen eingesetzt. Da diese Metalle allerdings sehr kostspielig sind, werden für die Beschichtung der erfindungsgemäßen Anoden bevorzugt günstigere Materialien eingesetzt, wie leitfähige Kohlenstoffformen ausgewählt aus der Gruppe umfassend: Graphit, Graphen, Aktivkohle, Ruß, Kohlenstoffnanoröhren, und Glaskohlenstoff. Besonders bevorzugt wird Aktivkohle zur Beschichtung des zur Herstellung der Anode benutzten Polymers eingesetzt. In einer besonders bevorzugten Ausführungsform der vorliegenden Erfindung wird eine Anode in der Biobrennstoffzelle eingesetzt, die aktivkohlebeschichtetes, offenporiges Polyurethan umfasst oder aus diesem besteht.

Für die Auswahl der Kathode für die erfindungsgemäße Brennstoffzelle gilt zunächst, wie für die Anode, dass diese eine Besiedlung durch die erfindungsgemäßen, weiter unten aufgeführten Mikroorganismen zulässt, deren Lebens- und Funktionsfähigkeit nicht behindert und elektrisch leitfähig ist. Ferner wird die Kathode bevorzugt aus einem Material hergestellt oder umfasst ein Material, das dazu geeignet ist, das oder die benutzten Oxidationsmittel bzw. Elektronenakzeptoren zu reduzieren. Ist Sauerstoff an der Kathode vorhanden, so wird dieser aufgrund seines hohen Redoxpotentials reduziert. Unter anaeroben Bedingungen bzw. niedriger Sauerstoffkonzentration können aber auch weitere Elektronenakzeptoren z.B. Nitrate, Sulfate, Kohlenstoffdioxid und Fumarat benutzt werden, allerdings stellt Sauerstoff das erfindungsgemäß bevorzugte Oxidationsmittel dar. Die erfindungsgemäße Kathode wird also so ausgewählt, dass sie in der Lage ist Sauerstoff zu reduzieren. Dieses kann dadurch erreicht werden, dass die Kathode ein Material umfasst, das in der Lage ist, Sauerstoff und andere Oxidationsmittel zu reduzieren. In einer bevorzugten Ausführungsform umfasst oder besteht die Kathode aus Manganoxid oder Magnesiumoxid. Alternativ oder zusätzlich sind auf der Kathode Mikroorganismen angesiedelt, die Sauerstoff und/oder andere Oxidationsmittel reduzieren können. Ähnlich der Anode ist es vorteilhaft, die Oberfläche der Kathode zu vergrößern, um die Anzahl gleichzeitig möglicher Reaktionen an ihr zu erhöhen. Ebenfalls vorteilhaft ist es, die Kathode so zu behandeln, dass ein schneller Biofilmbewuchs auf ihr ermöglicht wird. In einer bevorzugten Ausführungsform der erfindungsgemäßen Brennstoffzelle ist die Kathode angeraut, wodurch ihre Oberfläche vergrößert und ein schneller Biofilmbewuchs ermöglicht werden.

In einer anderen Ausführungsform besteht die Kathode (im Folgenden auch als Polymerkathode bezeichnet) aus den gleichen Materialien wie die Kathode, umfasst also das gleiche offenporigen Trägermaterial und die gleiche Beschichtung wie die Anode und ist ebenfalls mit Mikroorganismen besiedelt. Bevorzugte Mikroorganismen zur Besiedlung der Kathode sind *Desulfobulbaceae.* Bevorzugt ist die Zusammensetzung der Mikroorganismen auf der Anode anders als auf der Kathode. Um eine solche unterschiedlichen Besiedlung zu erhalten, werden die Anode und die Kathode vor der Anbringung in der Brennstoffzelle getrennt voneinander mit den entsprechenden Mikroorganismen angeimpft bzw. besiedelt. Eine solche Animpfung/Besiedlung erfolgt zum Beispiel durch eine Inkubation in einer Flüssigkeit, die entsprechende Mikroorganismen enthält. Ist die Polymerkathode besiedelt, erfolgt die Übertragung der Elektronen auf das oder die eingesetzten Oxidationsmittel bevorzugt über die Mikroorganismen. Das Material der Polymerkathode an sich muss in diesem Fall nicht dazu in der Lage sein.

Da die Biobrennstoffzelle in der erfindungsgemäßen Vorrichtung ein ausreichendes Überpotential liefert, wird sie in einer Ausführungsform dazu verwendet, CO₂ zu konvertieren. Durch die Konvertierung wird Kohlenstoffdioxid zu Methan und/oder Methanol, je nach Überpotential, konvertiert bzw. gewandelt. Bevorzugt wird hierbei der Kohlenstoffdioxid als Elektronenakzeptor an der Kathode eingesetzt. Da bei Vorhandensein von Sauerstoff an der Kathode dieses bevorzugt reduziert wird, wird für die CO₂-Konvertierung der Sauerstoffanteil in der Biobrennstoffzelle reduziert. Dies kann beispielsweise dadurch erfolgen, dass die Zeitintervalle, zu denen Luft zugeführt wird, verlängert werden. Alternativ oder ergänzend kann auch anstatt Luft eine sauerstoffärmere Gaszusammensetzung der Biobrennstoffzelle zugeführt werden. Unterstützend kommen die Biofilme auf der Kathode hinzu, in deren Teilbereichen anoxische Verhältnisse herrschen.

Wie oben ausgeführt, sind sowohl die Anode wie die Kathode derartig beschaffen, dass Mikroorganismen schnell und einfach diese besiedeln und einen Biofilm darauf bilden können.

Biofilme entstehen durch Anlagerung und Wachstum von Mikroorganismen an Grenzflächen, im vorliegenden Fall z.B. an die Oberflächen der Anode und/oder Kathode als der Grenze zum Elektrolyten. Die Mikroorganismen bilden dabei auch funktionale Konsortien, beispielsweise mit Austausch von Nähr- bzw. Abbaustoffen und liegen in einer Schleimschicht vor, die aus extrazellulären polymeren Substanzen (EPS) bestehen. Der Hauptbestandteil der EPS ist Wasser, welches mit den ansonsten hauptsächlich enthaltenen verschiedenen Polysaccharide sowie einer Vielzahl an Proteinen, Lipiden, Glykoproteinen, Glykolipiden und Phospholipiden durch Hydrogelbildung besagte Schleimschicht bildet. Durch die Schleimschicht wird die Haftung der darin enthaltenen Mikroorganismen aneinander und an die Grenzfläche erhöht, Substrate und Inhibitoren aus der umgebenden wässrigen Lösung werden reversibel adsorbiert und der Stofftransport zwischen den Mikroorganismen innerhalb des Biofilms wird erleichtert, was insgesamt auch zu einer besseren Abpufferung von Stoßbelastungen führt.

Zur Besiedlung der Anode werden bevorzugt Bakterien aus dem Kreis exoelektrogenen Bakterien ausgewählt. Besonders bevorzugt werden hierbei auf der Anode die folgenden Mikroorganismen angesiedelt: *Geobacter sulfurreducens, Geobacter metallireducens GS-15, Shewanella oneidensis MR-1, Synechocystis sp. PCC6803* und *Pelotomaculum thermopropionicum.*

Bilden diese Organismen gemeinsam einen Biofilm auf der Anode aus, so sind sie in der Lage, verschiedene Substrate umfassend Wasserstoff und kohlenstoffhaltige, organische Substrate an der Anode zu oxidieren, wobei die frei werdenden Elektronen über nanodrahtähnliche Pili (Nanodrähte) auf die Anode übertragen werden. Ohne an eine Theorie gebunden sein zu wollen wird angenommen, dass solche Nanodrähte bis auf Synechocystis von allen auf der Anode bevorzugt angesiedelten Mikroorganismen ausgebildet werden können, diese den Biofilm zwischen den Mikroorganismen füllen und sie auch mit der Anode verbinden. Von der Anode fließen die Elektronen unter Freisetzung elektrischer Energie zur Kathode, wo sie mit Hilfe eines Oxidationsmittels, wie z.B. Sauerstoff die Oxidation der ebenfalls an der Anode freigesetzten Kationen, bevorzugt Wasserstoffionen, zu Wasser treiben.

In einer Ausführungsform enthält die Biobrennstoffzelle zusätzlich zu den oben genannten, auf der Anodenoberfläche immobilisierten Organismen einen oder mehrere Organismen aus der Gruppe umfassend *Monascus purpureus (Hefepilz). Monascus purpureus* produziert nach getaner Fermentationsarbeit leicht antibiotisch wirkende Farbpigmente und Kohlenhydrate, ungesättigte Fettsäuren, Aminosäure, Monacoline (Abbau langkettiger lipophiler Kohlenwasserstoffe, die den Stoffwechsel vieler anderer MO hemmen), etc. (Reduzierung von Metaboliten); *Desmodesmos substicatus; Rhodospirillium rubrum* (CO-abbauend); *Erytrobacter litoralis; Bacillus subtilis subsp. Spizizenii; Clostridium cellulovorans; Thiosphaera pantothropha;* allgemein bekannte Nitrifizierer und methanotrophe Bakterien. Als Nitrifizierer umfasst die Brennstoffzelle bevorzugt eine oder mehrere Gattungen aus *Nitrosomonas, Nitrosococcus, Nitrosospira, Nitrobacter, Nitrospina* und *Nitrococcus.* Als methanotrophe Mikroorganismen umfasst die Brennstoffzelle bevorzugt eine oder mehrere Gattungen aus der Familie der Methylocystaceae, wie Methylocystis und/oder Methylosinus, und/oder aus der Familie der Methylococcaceae, wie Methylococcus und/oder Methylobacter, z.B. *Methylomonas* (Methanotroph, Proteobacteria), *Methylobacter* (Methanotroph, Proteobacteria), *Methylococcus.* (Methanotroph, Proteobacteria), *Methylosinus* (Methanotroph, Proteobacteria), *Methylocella* (Acidophil, methanotroph, Proteobacteria), *Methylacidiphilium* (Acidophil, methanotroph, Verrucomicbiaceae).

In einer bevorzugten Ausführungsform enthält die Biobrennstoffzelle *Monascus purpureus* (Hefepilz); *Desmodesmos substicatus; Rhodospirillium rubrum* (Proteobakterium); *Erytrobacter litoralis; Bacillus subtilis subsp. Spizizenii; Clostridium cellulovorans; Thiosphaera pantothropha;* mindestens einen allgemein bekannten Nitrifizierer sowie mindestens ein methanotrophes Bakterium, ausgewählt aus den oben benannten. Besonders bevorzugt sind: *Monascus purpureus* (Hefepilz); *Desmodesmos substicatus; Rhodospirillium rubrum* (Proteobakterium); *Erytrobacter litoralis; Thiosphaera pantothropha.*

In einer Ausführung der Biobrennstoffzelle der vorliegenden Erfindung sind die Anode und die Kathode voneinander getrennt. Eine Trennung kann beispielsweise dadurch erreicht werden, dass die Anode und die Kathode in voneinander getrennten Behältern untergebracht und neben dem Draht durch eine lonenbrücke verbunden werden, die den Durchtritt von Kationen ermöglicht. Eine Trennung kann auch durch eine ionenselektive Membran um eine der beiden Elektroden erreicht werden, wie sie beispielsweise in den PEM-Brennstoffzellen eingesetzt werden. Eine Membran ist als ionenselektive Membran geeignet wenn sie den Transport von Ionen ermöglicht, während der Transport von Elektronen verhindert wird und nur durch den die Anode und Kathode verbindenden Draht möglich ist. Ferner ist es bevorzugt, dass die ionenselektive Membran nur für Kationen passierbar ist. In einer bevorzugten Ausführungsform ist die ionenselektive Membran um die Anode angebracht. Der Nachteil der in den PEM-Zellen üblicherweise eingesetzten Membranen ist jedoch, dass sie anfällig sind für Verschmutzungen, verursacht durch Anlagerung von Mikroorganismen, insbesondere von Bakterien, die Biofilme auf solchen Membranen ausbilden, falls sie mit Ihnen in Kontakt stehen. Eine zusätzliche Verschmutzungsquelle hierbei sind auch die organischen Substrate, die zur Verstoffwechslung durch die Mikroorganismen in der erfindungsgemäßen Brennstoffzelle in dem Elektrolyten vorhanden sind und ebenfalls an die Membran anlagern können. Dadurch wird die Durchlässigkeit der Membran für Kationen herabgesetzt, was zur verminderten Leistung, bis zum vollständigen Abbruch der Stromerzeugung in der Biobrennstoffzelle führen kann. In einem solchem Fall muss die Membran ausgetauscht werden, was aufgrund der damit verbundenen hohen Kosten der Membran wie der durch die Unterbrechung der Stromproduktion entstandenen, möglichst zu vermeiden ist.

Eine der überraschenden Erkenntnisse bei der Anwendung der erfindungsgemäßen Brennstoffzelle war, dass der Biofilm aus extrazellulärer polymerer Substanz (EPS) und durchzogen von Nanodrähten, der durch die erfindungsgemäß eingesetzten Mikroorganismen auf der Anode ausgebildet wird Eigenschaften einer solchen ionenselektiven Membran aufweist, also den Durchtritt von Ionen, wie Kationen zulässt, jedoch den Elektronendurchtritt unterbindet und somit den Stromfluss durch den die Anode mit der Kathode verbindenden Draht sichert. Bevorzugt wird daher die erfindungsgemäße Brennstoffzelle derart bereitgestellt, dass die ionenselektive Membran auf der Anode von den darauf befindlichen Mikroorganismen gebildet wird. In einer bevorzugten Ausführungsform umfasst somit die ionenselektive Membran vorwiegend mikrobiell gebildete Biopolymere, welche von Nanodrähten durchzogen sind, die von den Mikroorganismen gebildet werden.

Wie oben beschrieben besteht für den Betrieb der Biobrennstoffzelle die Voraussetzung, dass die Poren und Kavernen der Anode wie der Kathode ionenleitend bleiben. Entstehen auf der Anode und/oder Kathode Biofilme aus extrazellulärer polymerer Substanz (EPS) durch Hydrogelbildung, so bilden in Laufe des Bestehens des Biofilms viele darin enthaltenen Mikroorganismen zusätzliche reversible und irreversible Stoffe, welche diese Leitfähigkeit zu und von den Poren und Kavernen unterbrechen. Es ist daher notwendig, den Biofilm von Zeit zu Zeit zu erneuern, um die störenden Stoffe zu entfernen. Die EPS umfasst neben hauptsächlich Polysacchariden auch viele Proteine. Diese sind zunächst aus L-Aminosäuren aufgebaut. Um die Biofilme abzubauen, und so den Aufbau von neuen, die Leitfähigkeit wieder in besseren Ausmaß garantierenden Biofilmen zu induzieren wird durch die vorliegende Erfindung ein Biofilmregenerationsverfahren bereitgestellt. Das Verfahren zur Biofilmregeneration umfasst die Zugabe einer Zusammensetzung umfassend D-Aminosäuren in den Elektrolyten der Brennstoffzelle. Bevorzugt umfasst diese Zusammensetzung D-Alanin. Dadurch kommt es zu einer Auflösung der Biofilme in der Elektrolytlösung. Bevorzugt werden kleine Mengen an D-Alanin zugesetzt, so dass eine Konzentration von D-Alanin in dem wässrigen Elektrolyten bei etwa 1 bis 1000 nmol/l liegen, bevorzugt bei etwa 50 - 150 nmol/l liegen. Die bevorzugte Menge bei der Reinigung von Abwassermembransystemen liegt bei 100 nmol/l bis 120 nmol/l. Anschließend wird die Biobrennstoffzelle nach dem Abbau der Biofilme weiterbetrieben, so dass die Mikroorganismen neue Biofilme ausbilden, diese also regenerieren können und die Brennstoffzelle die Stromproduktion wieder aufnimmt. Alternativ oder zusätzlich kann die Biobrennstoffzelle mit den dort anzusiedelnden, oben beschriebenen Mikroorganismen neu beimpft werden.

Das eingesetzte Oxidationsmittel wird in der erfindungsgemäßen Biobrennstoffzelle durch die Reaktion an der Kathode verbraucht, indem es z.B. im Fall von Sauerstoff zu Wasser umgesetzt wird. Um die stromerzeugende Reaktion fortführen zu können ist daher ein ständiger Nachschub des Oxidationsmittels notwendig. Der Nachschub des Oxidationsmittels erfolgt bevorzugt so häufig, dass immer ausreichende Mengen in der Brennstoffzelle vorhanden sind, damit die stromerzeugenden Redoxreaktionen an der Anode und der Kathode ohne Unterbrechung stattfinden können. Der Zeitpunkt für die Zufuhr von neuem Oxidationsmittel kann dabei z.B. durch Messung des noch vorhandenen Oxidationsmittels bestimmt werden, indem z.B. bei Einsatz von Sauerstoff dessen Gehalt in der Gasphase oberhalb des Elektrolyten in der Brennstoffzelle gemessen wird, oder eine abfallende Stromproduktion als Zeichen fehlenden Oxidationsmittels interpretiert wird. Die Messung der Parameter der Stromproduktion in der Brennstoffzelle, wie z.B. der Spannung oder Stromstärke kann an dem leitenden Draht zwischen der Anode und der Kathode erfolgen, parallel zu einem Lastwiderstand (bzw.bei Messung der Stromstärke in Reihe zu diesem). Die Zufuhr kann ebenfalls zu festgelegten Zeitpunkten erfolgen, ob auf vorhergehenden Messungen oder Schätzungen basierend. Da einige der eingesetzten Mikroorganismen anaerob sind oder bestimmte Stoffwechselreaktionen nur bei niedrigem Sauerstoffgehalt, bzw. anoxischen Bedingungen ausführen können, wird Sauerstoff nicht kontinuierlich sondern in Intervallen zugeführt, so dass, durch dessen Verbrauch, zwischen zwei Zeitpunkten an denen Sauerstoff zugeführt wird, Bedingungen mit niedrigem Sauerstoffgehalt in der Biobrennstoffzelle und/oder dem Biofilter entstehen. Ein weiterer Faktor hierbei sind die von den Bakterien gebildeten Biofilme. In diesen weist der Sauerstoff einen Konzentrationsgradienten auf, mit einer hohen Konzentration nahe der Oberfläche des Biofilms an der Grenze zum umgebenden wässrigen Medium und einer niedrigen Sauerstoffkonzentration, bzw. anoxischen Bedingungen tiefer im Biofilm, an der Grenze zu den besiedelten Festkörpern, also den Elektroden der Biobrennstoffzelle bzw. dem Aufwuchsmaterial des Biofilters. In einer Ausführungsform wird neues Oxidationsmittel alle 5 bis 60 Minuten der Brennstoffzelle zugeführt, bevorzugt alle 10 bis 30 Minuten, besonders bevorzugt alle 20 Minuten. Bevorzugt wird die Sauerstoffzuführung mit der Abführung des gereinigten Gasgemisches und der Zuführung eines neuen Volumens an zu reinigendem Gasgemisch gekoppelt. Dient Sauerstoff als bevorzugtes Oxidationsmittel, kann reiner Sauerstoff oder ein sauerstoffhaltiges Gasgemisch mit dem Sauerstoffgehalt der Luft, also mit etwa 21 % Sauerstoff zugegeben werden. In einer bevorzugten Ausführungsform wird die erfindungsgemäße Biobrennstoffzelle vorzugsweise mit Luft begast.

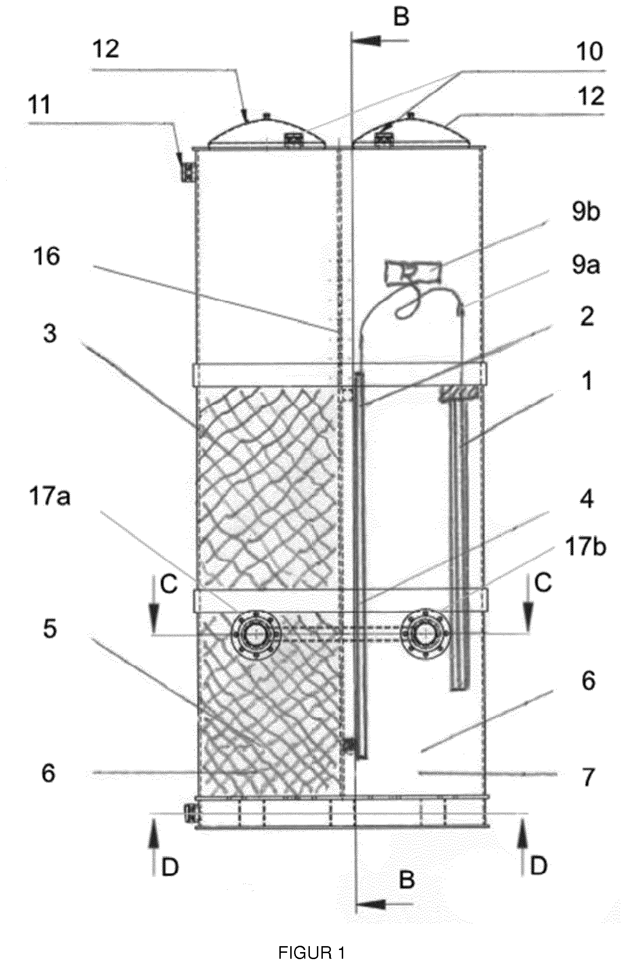

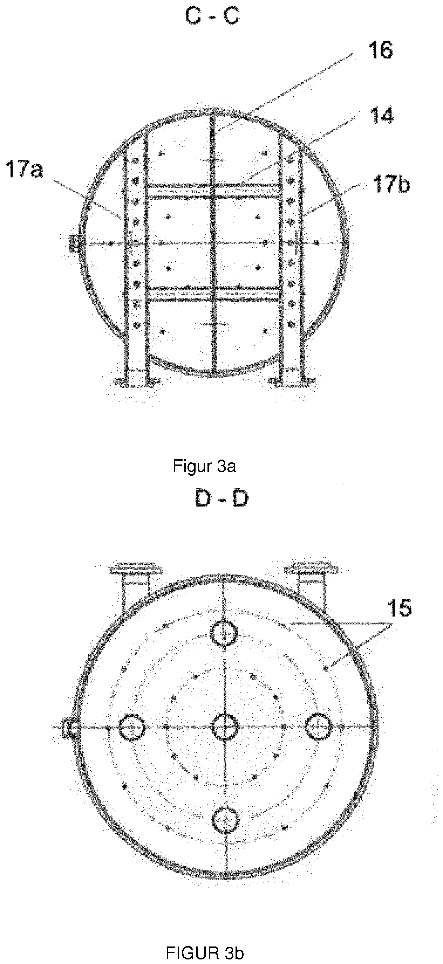

Um die Gaszusammensetzung über dem Elektrolyten der Biobrennstoffzelle kontrollieren zu können, sowie den Eintritt von unerwünschten Stoffen, den Austritt von Gasen oder Bakterien zu erschweren oder zu verhindern, wird die erfindungsgemäße Brennstoffzelle derart abgedichtet, dass der Zufluss/Eintritt sowie der Abfluss/Austritt von Gasen, Flüssigkeiten und Feststoffen zu der erfindungsgemäßen Brennstoffzelle nur dann erfolgt, wenn dies erforderlich oder erwünscht ist. Eine solche Abdichtung kann beispielsweise dadurch erfolgen, dass die Biobrennstoffzelle von allen Seiten von einem Gehäuse umgeben ist. Das Gehäuse der Biobrennstoffzelle ist bevorzugt gas- und flüssigkeitsdicht. Für eine Zu- und/oder Ableitung von Feststoffen, Flüssigkeiten und/oder Gasen sind an dem Gehäuse geeignete Öffnungen angebracht. Diese sind bevorzugt verschließbar und abdichtbar, bzw. im verschlossenen Zustand dicht gegenüber ungewolltem Ein- und/oder Austritt von Feststoffen, Flüssigkeiten und/oder Gasen. Die Zu- und Abführungsöffnungen werden bevorzugt in unterschiedlichen Größen und Ausführungsformen bereitgestellt, abhängig davon, welche Substanzen durch diese ein-/ausgeleitet werden sollen. So ist in einer Ausführungsform die Biobrennstoffzelle in einem Gehäuse enthalten, das getrennte Zu- und Abführungsmöglichkeiten für gasförmige, flüssige und/oder feste Substanzen umfasst. Die Biobrennstoffzelle selbst, bzw. deren Bestandteile werden innerhalb des Gehäuses angebracht und können auch mit diesem verbunden werden. Bevorzugt wird hierbei ein Gehäuse eingesetzt, wie in Figuren. 1-3b dargestellt und in der noch nicht veröffentlichten deutschen Patentanmeldung Nr. 10 2015 004 324.2.

Einer der Bestandteile der erfindungsgemäßen Biobrennstoffzelle ist der wässrige Elektrolyt, der die Anode und die Kathode umgibt. Die Zusammensetzung des Elektrolyts kann weitestgehend frei gewählt werden soweit es eine gute Leitfähigkeit für Ionen gewährleistet und das Überleben der darin enthaltenden Organismen sowie deren Stoffwechsel nicht vollkommen verhindert. Zu den Elektrolyten gehören die Lösungen von Säuren, Basen und deren Salze, die in der Lösung in unterschiedlichem Ausmaß zu Ionen dissoziieren. Beim Anlegen eines elektrischen Feldes können sich die dissoziierten Ionen bevorzugt in bzw. gegen die Feldrichtung bewegen und verursachen dadurch einen Ladungstransport und Strom, dessen Stärke abhängig ist von der Anzahl der sich bewegenden Ionen. Ein Faktor für eine gute Leitfähigkeit ist es daher, dass die im Elektrolyten enthaltenen Säuren, Basen und deren Salze möglichst vollständig dissoziiert und die Ionen von Wasser hydratisiert vorliegen. Säuren und Basen, bzw. deren Salze, die nahezu vollständig in wässriger Lösung dissoziiert vorliegen werden als stark bezeichnet, diejenigen mit nur teilweisen Dissoziierung als schwach, entsprechendes gilt für so entstandene Elektrolytenlösungen. Als Elektrolyt werden daher Lösungen von starken Säuren oder Basen, bzw. von deren Salzen bevorzugt, wie z.B. Lösungen der Salpetersäure oder der Essigsäure, wobei auch beide Säuren im Elektrolyten gelöst sein können. In einer bevorzugten Ausführungsform enthält der wässrige Elektrolyt in der erfindungsgemäßen Biobrennstoffzelle daher Essigsäure und/oder Salpetersäure. Der Elektrolyt wird durch Lösung der gewählten Säuren, Basen oder deren Salze in Wasser erzeugt. Bevorzugt wird als Wasser Abwasser, bzw. Schmutzwasser eingesetzt. Das genutzte Wasser, oder der mit dem Wasser erzeugte Elektrolyt kann auch weitere Substanzen bzw. Verbindungen enthalten, die für die Mikroorganismen als Nährstoffe, Reduktionsmittel und oder Oxidationsmittel geeignet sind.

Der wässrige Elektrolyt enthält Sauerstoff, Wasserstoff, Methan, Schwefelwasserstoff, Ammonium, Ammoniak, Salpetersäure, Nitrate, Nitrite und Sulfate, sowie einfache organische Kohlenstoffverbindungen wie Acetat/Essigsäure. Die lonennamen bzw. Salznamen in der vorangehenden Aufzählung beziehen sich auf die in der wässrigen Lösung enthaltenen Ionen und stehen stellvertretend auch für entsprechende Säuren bzw. Salze in ihren jeweiligen Formen vor der Aufnahme in die wässrige Lösung.

Die Zuführung von einer oder mehreren der oben genannten Substanzen erfolgt aus der mikrobiellen Emissionssenke. Hierzu können eine oder mehrere Verbindungselemente zwischen der Biobrennstoffzelle und dem Biofilter angebracht werden. Bevorzugt werden die Biobrennstoffzelle und der Biofilter in ein gemeinsames Gehäuse eingebaut, mit einer Zwischenwand zwischen diesen beiden Elementen. Zur Zuführung bzw. von Austausch von Substanzen durch diese Zwischenwand sind in einem Abschnitt der Zwischenwand Aussparungen bzw. Öffnungen vorhanden. Bevorzugt befindet sich der Abschnitt mit den Aussparungen oberhalb der Elektrolytenoberfläche in der Biobrennstoffzelle und der obersten Schicht aus Aufwuchsmaterial in dem Biofilter in der trennenden Zwischenwand. Somit wird in einer Ausführungsform eine Vorrichtung bereitgestellt, worin die Biobrennstoffzelle und die mikrobielle Emissionssenke in gasförmiger, oder in gasförmiger und flüssiger Verbindung miteinander in Verbindung stehen. Durch diese Verbindung kann sowohl das eingeleitete, zu reinigende Gasgemisch wie das eingeleitete sauerstoffhaltige Gas zwischen beiden Bestandteilen der erfindungsgemäßen Vorrichtung zirkulieren, wie auch das in dem Biofilter entstehende Acetat/Essigsäure mit den durchgeleiteten Gasgemisch, bzw. mit den im Biofilter entstehenden Gasen wie Wasserstoff in die Biobrennstoffzelle übertragen werden.

In einer nicht erfindungsgemäßen Ausführungsform können die Biobrennstoffzelle wie der Biofilter auch getrennt voneinander betrieben werden. In einer nicht erfindungsgemäßen Ausführungsform wir die Biobrennstoffzelle alleine betrieben, d.h. ohne eine Verbindung mit dem Biofilter. Für die Instandsetzung und Aufrechterhaltung der Funktion werden in diesem Betriebsmodus der Biobrennstoffzelle Substanzen umfassend mindestens Sauerstoff und eine oder mehrere einfache organische Kohlenstoffverbindungen aus der Gruppe umfassend Glukose, Acetat, Laktat, Pyruvat, Propionat, Fumarat, Ethanol und Methanol zugeführt.

Diese Substanzen werden bevorzugt schon vor der Inbetriebnahme der Biobrennstoffzelle im Wasser soweit möglich gelöst, oder während, oder nach der Erzeugung des wässrigen Elektrolyten zugeführt werden. Die Zugabe einer oder mehrerer dieser Substanzen kann einmalig oder mehrfach erfolgen, wobei die mehrfache Zugabe kontinuierlich oder intervallförmig erfolgen kann. So können beispielsweise zum Start der Stromerzeugung in der erfindungsgemäßen Biobrennstoffzelle eine oder mehrere der oben genannten Substanzen so in einer Menge im Elektrolyten gelöst werden, dass die Brennstoffzelle Strom erzeugt. Später werden die Substanzen zu Zeitpunkten eingeführt, wenn die von der Brennstoffzelle erzeugte Spannung unter einen festzusetzenden Schwellenwert fällt, bzw. bevorzugt aufgrund von Erfahrungswerten jeweils kurz vor diesen Zeitpunkten.

In einer nicht zur Erfindung gehörenden Ausführungsform wird daher eine Biobrennstoffzelle bereitgestellt, wobei zu einem oder mehreren Zeitpunkten der Biobrennstoffzelle Sauerstoff, Wasserstoff, Methan, Schwefelwasserstoff, Ammonium, Ammoniak, Salpetersäure, Nitrate, Nitrite, Sulfate, und/oder einfache organische Kohlenstoffverbindungen wie Glukose, Acetat, Laktat, Pyruvat, Propionat, Fumarat, Ethanol und/oder Methanol zugeführt werden. Die Zuführung der oben genannten Substanzen erfolgt bevorzugt durch die Zuführungsöffnungen und/oder Zuführungen, die an dem Gehäuse der Biobrennstoffzelle angebracht sind.

Einige der Substanzen werden bevorzugt an spezifische Stellen innerhalb der Biobrennstoffzelle zugeführt. So erfolgt die Zuführung von Sauerstoff bzw. von Luft bevorzugt in der Nähe der Kathode, um die Reduktion von Sauerstoff dadurch zu beschleunigen. Hierzu werden in einer Ausführungsform in der Nähe der Kathode verschließbare Zuführungsöffnungen oder in die Brennstoffzelle hineinragende, oder durch die Brennstoffzelle durchgehende Zuführungen, wie beispielsweise Rohre umfassend verschließbare Öffnungen angebracht.

In einer Ausführungsform werden noch weitere Substanzen zu dem Elektrolyten zugeführt. Diese umfassen bevorzugt gelöste Metalle (also Metallionen), wobei die Metalle ausgewählt werden aus der Gruppe umfassend Palladium, Platin, Plutonium, Gold, Silber, Eisen, Mangan, Uran, Chrom, Tellurium und Technetium. Die Metallionen werden vorher in einem 3 - 7 %igem Gel aus Chitosanlactat und Wasser gebunden. *Desulfuromonadales wie Malonomonas* bauen das Chitosanlactat ab um die Energie aus dem Nitrat (vormals Ammonium) zu gewinnen. Somit ist der Biofilter bzw. die Brennstoffzelle ein wichtiger Part zur Verbesserung der Stickstoffbelastung des Grundwassers. Möglich ist darüber hinaus die Freisetzung der Metallionen mit halbleiterkatalysierten Reaktionen bei diffusem Licht und mit Metallkomplex modifiziertem Titandioxid.

Durch Mikroorganismen in der Biobrennstoffzelle werden diese Metallionen zu Ionen niedrigerer Oxidationsstufen, bzw. zur Elementen (Oxidationszahl 0) reduziert. Die hierzu erforderlichen Elektronen werden von den Mikroorganismen aus Wasserstoff oder aus organischen Kohlenstoffverbindungen bezogen. Dadurch entstehen unlösliche Ionen oder den jeweiligen Metallatomen reduziert (z.B. Pd (II) → Pd (0) oder Au(III) → Au(0)) und somit entweder aus der Lösung ausgefällt oder in den Mikroorganismen abgelagert. Die ausgefällten oder abgelagerten Metalle niedrigerer Oxidationsstufe haben dabei die Form von Nanopartikeln, d.h. sie weisen einen Durchmesser zwischen etwa 1 nm und 100 nm auf, mit der Mehrzahl der Partikel bei etwa 7 - 10 nm Durchmesser. Solche Nanopartikel, insbesondere aus Gold, Platin oder Palladium stellen aufgrund ihrer hohen katalytischen Eigenschaften ein wertvolles Produkt dar. Bei anderen, wie z.B. bei Uran, Plutonium oder Chrom, stellt die Möglichkeit, diese aus Lösungen präzipitieren zu können ein wertvolles Verfahren zur Reinigung von Flüssigkeiten, wie beispielsweise industriellen Abwässern.

Somit wird auch ein Verfahren zur Aufreinigung von Flüssigkeiten und/oder zur Herstellung von Nanometalpartikeln zur Verfügung gestellt, welches nicht zur Erfindung gehört, umfassend die Schritte von:
(a) Zuführung von einer Flüssigkeit enthaltend gelöste Metallionen zu dem Elektrolyten in der Biobrennstoffzelle;
(b) Inkubation der Mikroorganismen in der Mischung aus Elektrolyt und der zugeführten Flüssigkeit;
(c) Abnahme des Elektrolyten;
(d) Zentrifugation des Elektrolyten; und
(e) Kollektion des Präzipitats enthaltend die Nanometalpartikel.

Um die Mikroorganismen auch von den Oberflächen der Erfindungsgemäßen Vorrichtung bzw. der Biobrennstoffzelle besser ablösen und ebenfalls dem oben beschriebenen Verfahren zuführen zu können, können auch zunächst die Biofilme, in denen die Mikroorganismen sich befinden durch das weiter oben beschriebene Verfahren zur Regeneration der Biofilme aufgelöst werden, der Elektrolyt abgezogen und die Bakterien von den Oberflächen heruntergewaschen werden. Die so entstehende Waschflüssigkeit und die Ablagerungen am Boden der Biobrennstoffzelle werden dann ebenfalls den Schritten (d) und (e) des Verfahrens zugeführt, also zentrifugiert und die Präzipitate mit den Nanopartikeln gesammelt. Es wird ausdrücklich darauf hingewiesen, dass die jeweils beschriebenen Ausführungsformen des Biofilters und der Biobrennstoffzelle, als Teile der erfindungsgemäßen Erfindung jeweils frei und in allen beschriebenen Variationen miteinander kombinierbar sind. Die teils getrennte Beschreibung ohne möglicherweise explizit herausgestellten Kontext erfolgt lediglich aus der Notwendigkeit heraus, die jeweiligen Ausführungsformen in erforderlichem Umfang zu beschreiben und nicht aus einer Absicht, einzelne Ausführungsformen oder Varianten, soweit nicht anders angemerkt, nicht miteinander kombinieren zu wollen.

Die Verwendung des Wortes "etwa" definiert bevorzugt in allen Fällen, in denen dieses Wort im Rahmen der vorliegenden Erfindung verwendet wird, eine Abweichung im Bereich von 1%-30%, insbesondere von 1%-20%, insbesondere von 1%-10%, insbesondere von 1%-5%, insbesondere von 1%-2%, von der Festlegung, die ohne die Verwendung dieser Wörter gegeben wäre.

Weitere Vorteile, Ziele und Eigenschaften der vorliegenden Erfindung werden anhand nachfolgender Beschreibung anliegender Zeichnungen erläutert, in welchen beispielhaft die erfindungsgemäße Vorrichtung dargestellt ist. Bauteile oder Elemente der erfindungsgemäßen Vorrichtung, welche in den Figuren wenigstens im Wesentlichen hinsichtlich ihrer Funktion übereinstimmen, können hierbei mit gleichen Bezugszeichen gekennzeichnet sein, wobei diese Bauteile oder Elemente nicht in allen Figuren beziffert oder erläutert sein müssen.

### Kurze Beschreibung der Zeichnungen

Der Erfindung ist nachstehend anhand von Ausführungsbeispielen und Figuren näher erläutert ohne dass dies als auf eine bestimmte Ausführungsform als beschränkend verstanden werden soll.

Es zeigen:
- Figur 1:: Schema einer beispielhaften erfindungsgemäßen Vorrichtung,
- Figur 2:: Schnitt durch die Vorrichtung an der B-B-Achse
- Figur 3a:: Schnitt durch die Vorrichtung an der C-C-Achse
- Figur 3b: Schnitt durch die Vorrichtung an der D-D-Achse

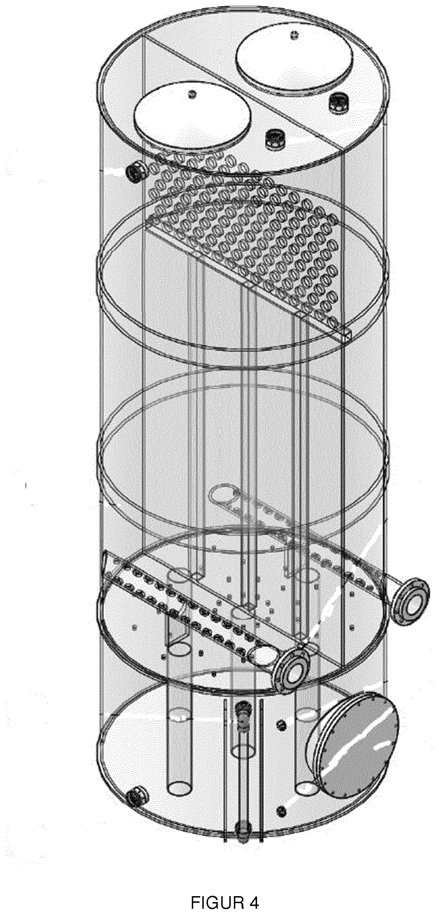

- Figur 4:: Isometrische Ansicht des Gehäuses der erfindungsgemäßen Vorrichtung.
- Figur 5: Schematische Darstellung zum Zusammenwirken von oxidierenden Archaebakterien und sulfatreduzierenden Bakterien in einem Konsortium bei der anaeroben Oxidation von Methan.

### Bevorzugte Ausführungsform der Erfindung

(Die benutzten Bezugszeichen beziehen sich auf Figuren 1-3b)

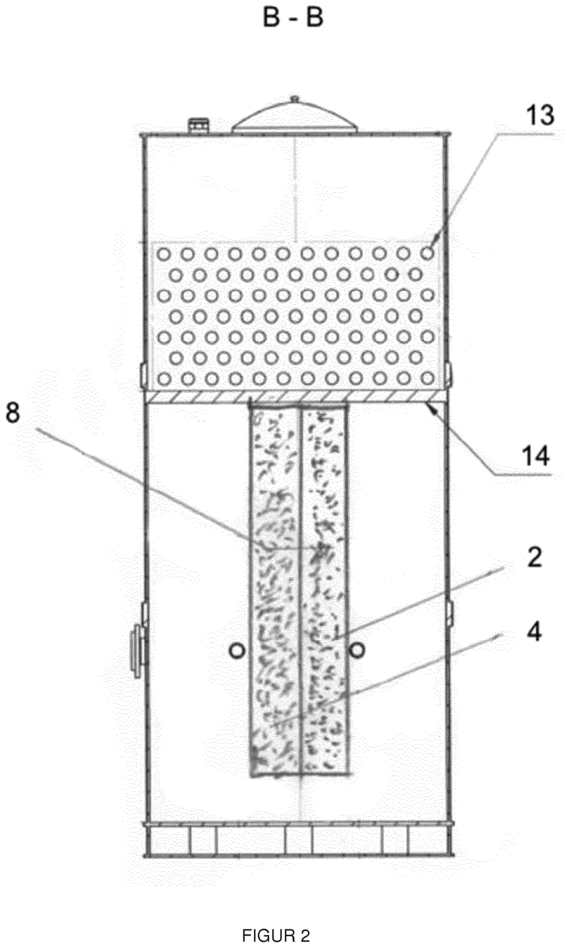

In Figur 1 ist die erfindungsgemäße Vorrichtung bestehend aus einem Gehäuse umfassend einem Biofilter (hier in der Figur die linke Hälfte) und einer Biobrennstoffzelle (in der Figur die rechte Hälfte], die von einer Zwischenwand (16) voneinander getrennt sind. Die Vorrichtung verfügt über verschiedene Füllzugänge (12) und Zuläufe (10), über die Feststoffe (über 12) und/oder Flüssigkeiten (über 10 und 12) zugeführt und gegebenenfalls auch abgeführt werden können. Beispielsweise kann über den Füllzugang (12) im Biofilterbereich der Vorrichtung das Füllmaterial (hier Aufwuchskörperfüllung (3)) zu- und abgeführt werden, über den ebendort liegenden Zulauf (10) können Flüssigkeiten zur Befeuchtung des Aufwuchsmaterials zugeführt werden. In dem Biobrennstoffzellenbereich ist nahe der Zwischenwand (16) die Anode (2) und ihr gegenüber die Kathode (1) untergebracht. Diese beiden Elektroden sind verbunden durch einen Draht (9a) umfassend einem Lastwiderstand (9b). In der Nähe der Kathode (1) ist eine rohrförmige Zuführung (17b) angebracht, die zur Zuführung sauerstoffhaltiger Luft, bzw. von Sauerstoff eingesetzt werden kann. Als Gegenstück ist in dem Biofilter ebenfalls eine rohrförmige Zuführung (17a) angebracht, die zur Zuführung der zu reinigenden Gasgemische eingesetzt werden kann. Durch die Platzierung inmitten der Aufwuchskörper (3) durchströmt das eingeleitete Gasgemisch unmittelbar bei der Einleitung die aufgeschichteten Aufwuchskörper (3). Beide Zuführungen (17a) und (17b) können auch zur Abführung von Gasen bzw. Gasgemischen eingesetzt werden. Auf der Anode (2) sind exoelektrogene Mikroorganismen (4) angebracht, die ebenfalls überdimensioniert in Figur 2 angedeutet sind. Diese bilden auf der Oberfläche der Anode (2) einen Biofilm aus, durch den sie besser an Anode (2) anhaften und immobilisiert sind und die die Kathode (1) und die Anode (2) trennende Ionenselektive Membran (8) (in Figur 2) bildet. Die beiden Elektroden sind vom Elektrolyten (7) umgeben, der den lonentransport von der Anode (2) zur Kathode (1) vermittelt. Sowohl in dem Biofilter wie in der Biobrennstoffzelle sind anaerobe und aerobe denitrifizierende Mikroorganismen (6) sowie weitere Organismen vorhanden, wie sie weiter oben beschrieben worden sind. Die gasförmigen Bestandteile des durch das Aufwuchsmaterial durchfließenden Gasgemischs werden durch die dort angesiedelten Organismen (5), (6) und durch Reaktionen mit Sauerstoff, Wasser und anderen Gasen abgebaut. Dabei entsteht unter anderem Acetat/Essigsäure und Wasserstoff, die durch die Aussparungen (13) in der Zwischenwand (16) in die Brennstoffzelle hinübergeleitet und dort, von den an der Anode (2) angesiedelten Mikroorganismen (4) zu Wasserstoff und nachfolgend Wasserstoffionen und Elektronen abgebaut. Die Elektronen fließen über den Draht (9a), die Wasserstoffionen durch den Elektrolyten (7) zur Kathode (1), wo sie mit Sauerstoff Wasser bilden. Am Boden der erfindungsgemäßen Vorrichtung sind Öffnungen für Sickerwasser vorgesehen (15). Die Stabilität des Gehäuses wird durch die Anbringung von Zwischenversteifungen (14) verbessert.

In Biomasse Technologie-Systemen (BMT-Systemen) entstehen Gasgemische, die als Beispiel für das durch die erfindungsgemäße Vorrichtung zu reinigendes Gasgemisch dienen können. Deren Zusammensetzung kann wie folgt sein: 68 - 71 Vol% Methan, 25 - 27 Vol% Kohlendioxid, 1,0 - 2,0 Vol% Kohlenwasser-stoffe, 0,1 - 0,2 Vol% Ammoniak, 0,1 - 0,2 Vol% Schwefelwasserstoff, 0,1 - 0,3 Vol% Sauerstoff, 0,5 - 1,5 Vol% Stickstoff.

Die gemessenen Werte nach BMT-System und vor Biofilter liegen derzeit bei: 40 - 73 Vol% Methan; 24 - 27 Vol% Kohlendioxid; 0,9 - 9,0 Vol%; Kohlenmonoxid: 0,1 - 5 Vol%; Kohlenwasserstoffe; 0,1 - 5,5 Vol% Ammoniak; 0,01 - 1,0 Vol% Schwefelwasserstoff; 0,1 - 0,6 Vol% Sauerstoff und 2,5 - 15 Vol% Stickstoff.

Ein solches Gasgemisch wird wie oben beschrieben durch den Biofilter in die erfindungsgemäße Vorrichtung eingeleitet und dort abgebaut. Durch den Abbau der unerwünschten Gase und dabei aufgrund deren größten Volumenanteils insbesondere von Methan zusammen mit den anderen Kohlenwasserstoffen entsteht in der kombinierten erfindungsgemäßen Vorrichtung Strom. Die Leistungsdichte der Biobrennstoffzelle liegt zwischen etwa 2.700 und 3.900 mW/m². Das theoretisch erreichbare Redoxpotenzial liegt bei dem Redoxpaar H₂ als Elektronendonor und O₂ als Elektronenakzeptor bei maximal etwa 1.2 V; die freie Energie bei dG₀'= 237 kJ/mol. Allerdings verbraucht das biologische System an selbstgenutzter Energie etwa 0,8 V. Somit ist bei einem reinen Betrieb der Biobrennstoffzelle ohne den Biofilter, wobei Wasserstoff, Acetat/Essigsäure und Ammoniak oder Salpetersäure statt über den Biofilter gesondert in die Brennstoffzelle eingeleitet wird, von einer tatsächlich nutzbaren Energie von etwa 0,4 V zu rechnen. Wird dagegen die erfindungsgemäße Vorrichtung, also die Kombination aus der mikrobiellen Emissionssenke und der Biobrennstoffzelle gemeinsam betrieben, so verbessert sich durch die vorgeschaltete Methanoxidation die Eigenverbrauchsbilanz um etwa 0,35 bis 0,55 V. Die tatsächlich nutzbare Energie liegt damit beim Betrieb der kombinierten erfindungsgemäßen Vorrichtung umfassend Biofilter und Biobrennstoffzelle bei etwa > 0,6 bis 0,8 V.

### Bezugszeichen

- 1.: Kathode
- 2.: Anode
- 3.: Aufwuchskörperfüllung
- 4.: Exoelektrogene Mikroorganismen auf der Anodenoberfläche
- 5.: Oxidierende Archaebakterien und sulfatreduzierende Mikroorganismen
- 6.: Anaerobe und aerobe denitrifizierende Mikroorganismen
- 7.: Elektrolyt
- 8.: Ionenselektive Membran
- 9a.: Draht verbindend Kathode mit Anode
- 9b.: Lastwiderstand
- 10.: Zulauf
- 11.: Zirkulation
- 12.: Füllzugänge
- 13.: Öffnungen in der Zwischenwand
- 14.: Versteifung Zwischenwand
- 15.: Öffnungen für Sickerwasser
- 16.: Zwischenwand trennend Biobrennstoffzelle und Biofilter
- 17a.: Zuführung für Gasgemische (auf der Biofilterseite) mit Öffnungen
- 17b.: Zuführung für sauerstoffhaltige Gase/Sauerstoff/Luft (Brennstoffzellenseite) mit Öffnungen
- 18.: Gehäusebereich umfassend die Biobrennstoffzelle
- 19.: Gehäusebereich umfassend den Biofilter

Die Betriebsweise der Vorrichtung umfassend den Biofilter und die Biobrennstoffzelle ist bevorzugt getaktet.
A. Einlasstakt des Gasgemisches, zugleich Ausstoß des gereinigten Gasgemisches aus vorangehendem Zyklus in die Umgebung, Einfluss von Luft/sauerstoffhaltigem Gas und Durchfluss von Wasserstoff und Acetat/Essigsäure aus dem Biofilter in die Brennstoffzelle
B. Inkubation des Gasgemisches in dem Biofilter mit Abbau der Gase, Stromerzeugung in der Biobrennstoffzelle. Dann wieder A.

## Patentansprüche

1. Vorrichtung zum Abbau von Gasen aus Gasgemischen und Erzeugung von elektrischem Strom umfassend:
(a) eine Biobrennstoffzelle; und
(b) einen Biofilter; umfassend
(i) eine Aufschüttung eines Aufwuchsmaterials (3);
(ii) eine Befeuchtungsvorrichtung zur Befeuchtung des Aufwuchsmaterials; und
(iii) Mikroorganismen (5, 6);
wobei die Biobrennstoffzelle und der Biofilter derart miteinander verbunden sind, dass zumindest Gase zwischen ihnen zirkulieren und Substanzen von dem Biofilter der Biobrennstoffzelle zugeführt werden können,
die Befeuchtungsvorrichtung dazu eingerichtet ist, eine Flüssigkeit in feinen Tropfen zu verteilen, nebelartig zu versprühen oder zu zerstäuben und die Mikroorganismen (5, 6) auf dem Aufwuchsmaterial (3) aufgebracht und darauf in einem Biofilm immobilisiert sind.

2. Vorrichtung nach Anspruch 1, wobei der Biofilter Aufwuchsmaterial (3) umfasst ausgewählt aus der Gruppe umfassend: Holz, Bambus, Kokosfasern, Kunststoff, Gitterzellkugeln, offenzellige Schaumstoffe und Vulkangestein, wobei bevorzugt das Aufwuchsmaterial Holzschnitzel (3) umfasst.

3. Vorrichtung nach einem der Ansprüche 1 oder 2, wobei der Biofilter Mikroorganismen (5, 6) umfasst ausgewählt aus der Gruppe umfassend:
(a) aerobe methanoxidierende Mikroorganismen;
(b) anaerobe methanoxidierende Mikroorganismen;
(c) schwefeloxidierende Mikroorganismen;
(d) sulfatreduzierende Mikroorganismen;
(e) Milchsäurebakterien darunter bevorzugt die Lactobacillales;
(f) Schimmelpilze darunter bevorzugt Pilze aus der Gattung der Pinselschimmel;
(g) CO-abbauende Mikroorganismen;
(h) biolumineszierende Mikroorganismen;
(i) aerobe und anaerobe denitrifizierende Mikroorganismen (6); und
(j) oxidierende Archaebakterien.

4. Vorrichtung nach Anspruch 3, wobei der Biofilter mindestens jeweils einen Mikroorganismus aus jeweils jeder der Untergruppen (a) bis (j) umfasst.

5. Vorrichtung nach Anspruch 3 oder 4, wobei der Biofilter als Vertreter der Untergruppen (a) bis (j) die folgenden Mikroorganismen umfasst:
*(a) Nitrosopumilus maritimus*
*(b) Geobacter humiredudens, Pelobacter carbinolicus;*
*(c) Chlorobium limicola;*
*(d) Thermodesulfobacterium sp.;*
*(e) Lactobacillus casei;*
*(f) Penicillium roqueforti;*
*(g) Rhodospirillium rubrum;*
*(h) Aliivibrio fischeri;*
*(i) Pseudomonas stutzeri;* und
*(j)* Crenarchaeota(a), *Methanospirillium hungatei* und *Nanoarchaeum equitans.*

6. Vorrichtung nach einem der Ansprüche 1 bis 5, wobei die Biobrennstoffzelle umfasst:
(i) eine Anode (2);
(ii) eine Kathode (1);
(iii) einen leitenden Draht (9a), der die Anode (2) und die Kathode (1) verbindet;
(iv) einen wässrigen Elektrolyten (7); und
(v) Mikroorganismen (4, 6);
wobei die Anode (2) und die Kathode (1) in den Elektrolyten (7) eingetaucht sind, der leitende Draht (9a) überwiegend außerhalb des Elektrolyten (7) verläuft und wobei ferner auf der Anodenoberfläche exoelektrogene Mikroorganismen (4) immobilisiert sind.

7. Vorrichtung nach Anspruch 6, wobei die Anode (2) als eine Matte geformt ist und ein offenporiges Trägermaterial umfasst,
und wobei die Kathode (1) Magnesiumoxid oder Manganoxid umfasst,
wobei das Trägermaterial mit einem elektrisch leitenden anorganischen Werkstoff beschichtet ist.

8. Vorrichtung nach einem der Ansprüche 6 bis 8, wobei auf der Anodenoberfläche folgende exoelektrogenen Mikroorganismen (4) angesiedelt sind: *Geobacter sulfurreducens, Geobacter metallireducens GS-15, Shewanella oneidensis MR-1, Synechocystis sp. PCC6803, Pelotomaculum thermopropionicum* und *Desulfobulbaceae.*

9. Vorrichtung nach einem der Ansprüche 6 bis 9, wobei die Biobrennstoffzelle ferner die folgenden Mikroorganismen enthält:
*(a) Monascus purpureus;*
*(b) Desmodesmos substicatus;*
*(c) Rhodospirillium rubrum;*
*(d) Erytrobacter litoralis;*
*(e) Bacillus subtilis subsp. Spizizenii;*
*(f) Clostridium cellulovorans;*
*(g) Thiosphaera pantothropha;*
(h) Nitrifizierer ausgewählt aus der Gruppe umfassend *Nitrosomonas, Nitrosococcus, Nitrosospira, Nitrobacter, Nitrospina, Nitrococcus* und *Nitrosopumilus maritimus;*
(i) methanotrophe Bakterien ausgewählt aus der Gruppe umfassend: *Methylocystaceae* und *Methylococcaceae;* und
(j) Anaerobe und aerobe denitrifizierende Mikroorganismen (6).

10. Vorrichtung nach einem der Ansprüche 6 bis 9, wobei sich eine ionenselektive Membran (8) zwischen der Anode(2) und Kathode (1) befindet, wobei die ionenselektive Membran (8) eine extrazelluläre polymere Substanz (EPS) umfasst, die von durch Mikroorganismen gebildeten Nanodrähten durchzogen ist.

11. Vorrichtung nach einem der Ansprüche 6 bis 10, wobei der wässrige Elektrolyt (7) Substanzen enthält umfassend Sauerstoff, Wasserstoff, Methan, Schwefelwasserstoff, Ammonium, Ammoniak, Salpetersäure, Nitrate, Nitrite, Sulfate, einfache organische Kohlenstoffverbindungen wie Glukose, Acetat, Laktat, Pyruvat, Propionat, Fumarat, Ethanol und/oder Methanol.

12. Vorrichtung nach einem der Ansprüche 1 bis 11, welche weiterhin ein Gehäuse umfasst, wobei der Biofilter und die Biobrennstoffzelle in dem Gehäuse untergebracht sind, durch eine Zwischenwand darin voneinander getrennt sind, wobei die Zwischenwand (16) in einem Abschnitt Aussparungen (13) aufweist, durch welche die Biobrennstoffzelle in fluider und gasförmiger Verbindung mit dem Biofilter steht und wobei ferner das Gehäuse eine Vielzahl von Öffnungen und Zuführungen (10-12, 17a, 17b) zum Zuführen und Abführen von Feststoffen, Flüssigkeiten und/oder Gasen aufweist.

13. Verfahren zur Reinigung von Gasgemischen und zur Erzeugung von elektrischem Strom, **dadurch gekennzeichnet, dass** in der Vorrichtung nach einem der Ansprüche 1 bis 12 Schritte durchgeführt werden umfassend:
(a) Einleitung des zu reinigenden Gasgemisches durch den Biofilter;
(b) Inkubation des Gasgemisches in der Vorrichtung, wobei die Inkubationszeit 5 bis 60 Minuten beträgt; und
(c) Einleitung sauerstoffhaltiger Luft oder Sauerstoff durch die Biobrennstoffzelle bei gleichzeitiger Abführung des gereinigten Gasgemisches aus der Vorrichtung.
wobei Substanzen aus dem Biofilter in die Biobrennstoffzelle übertragen werden und nach Schritt (c) zyklisch ab (a) die Schritte wiederholt werden.

14. Verfahren nach Anspruch 13, ferner umfassend:
(d) Befeuchtung des Aufwuchsmaterials in dem Biofilter.

15. Verfahren nach einem der Ansprüche 13 bis 14, wobei der Sauerstoffanteil im Gehäuse der Vorrichtung erniedrigt wird, so dass Kohlenstoffdioxid statt Sauerstoff als Elektronenakzeptor dient und Kohlenstoff dabei zu Methan konvertiert wird.

## Claims

1. A device for the decomposition of gases from gas mixtures and generation of electric current, comprising:
(a) a biofuel cell; and
(b) a biofilter; comprising
(i) an accumulation of growing material (3);
(ii) a moistening device for moistening the growth material; and
(iii) microorganisms (5, 6);
wherein the biofuel cell and the biofilter are connected to one another in such a way that at least gases circulate between them and substances can be supplied from the biofilter to the biofuel cell,
the moistening device is configured to distribute a liquid in fine droplets, to spray or atomize it in a mist, and
the microorganisms (5, 6) are applied to the growth material (3) and immobilised thereon in a biofilm.

2. The device according to claim 1, wherein the biofilter comprises growth material (3) selected from the group comprising: wood, bamboo, coconut fibres, plastic, lattice cell beads, open-cell foams and volcanic rock, wherein the growth material comprises preferably wood chips (3).

3. The device according to any one of claims 1 to 3, wherein the biofilter comprises microorganisms (5, 6) selected from the group comprising:
(a) aerobic methane oxidizing microorganisms;
(b) anaerobic methane oxidizing microorganisms;
(c) sulfur oxidizing microorganisms;
(d) sulfate-reducing microorganisms;
(e) lactic acid bacteria, preferably Lactobacillales;
(f) molds, preferably fungi of the genus of brush molds;
(g) CO-degrading microorganisms;
(h) bioluminescent microorganisms;
(i) aerobic and anaerobic denitrifying microorganisms (6); and
(j) oxidising archaebacteria.

4. The device according to claim 3, wherein the biofilter comprises at least one microorganism from each of the subgroups (a) to (j).

5. The device according to claim 3 or 4, wherein the biofilter comprises the following microorganisms as representatives of subgroups (a) to (j):
*(a) Nitrosopumilus maritimus*
*(b) Geobacter humiredudens, Pelobacter carbinolicus;*
*(c) Chlorobium limicola;*
*(d) Thermodesulfobacterium sp.;*
*(e) Lactobacillus casei;*
*(f) Penicillium roqueforti;*
*(g) Rhodospirillium rubrum;*
*(h) Aliivibrio fischeri;*
*(i) Pseudomonas stutzeri;* and
*(j)* Crenarchaeota(a), *Methanospirillium hungatei* and *Nanoarchaeum equitans.*

6. The device according to any of claims 1 to 5, wherein the biofuel cell comprises:
(i) an anode (2);
(ii) a cathode (1);
(iii) a conductive wire (9a) connecting the anode (2) and the cathode (1);
(iv) an aqueous electrolyte (7); and
(v) microorganisms (4, 6);
wherein the anode (2) and the cathode (1) are immersed in the electrolyte (7), the conductive wire (9a) extends predominantly outside the electrolyte (7), and
wherein exoelectrogenic microorganisms (4) are further immobilized on the anode surface.

7. The device according to claim 6, wherein the anode (2) is formed as a mat and comprises an open-pore carrier material,
and wherein the cathode (1) comprises magnesium oxide or manganese oxide,
wherein the carrier material is coated with an electrically conductive inorganic material.

8. The device according to any one of claims 6 to 8, wherein the following exoelectrogenic microorganisms (4) are located on the anode surface: *Geobacter sulfurreducens, Geobacter metallireducens GS-15, Shewanella oneidensis MR-1, Synechocystis sp. PCC6803, Pelotomaculum thermopropionicum* and *Desulfobulbaceae.*

9. The device according to any of claims 6 to 9, wherein the biofuel cell further includes the following microorganisms:
*(a) Monascus purpureus;*
*(b) Desmodesmos substicatus;*
*(c) Rhodospirillium rubrum;*
*(d) Erytrobacter litoralis;*
*(e) Bacillus subtilis subsp. Spizizenii;*
*(f) Clostridium cellulovorans;*
*(g) Thiosphaera pantothropha;*
(h) nitrifiers selected from the group comprising *Nitrosomonas, Nitrosococcus, Nitrosospira, Nitrobacter, Nitrospina, Nitrococcus* and *Nitrosopumilus maritimus;*
(i) methanotrophic bacteria selected from the group comprising: *Methylocystaceae* and *Methylococcaceae;* and
(j) anaerobic and aerobic denitrifying microorganisms (6).

10. The device according to any one of claims 6 to 9, wherein an ion-selective membrane (8) is located between the anode (2) and cathode (1), wherein the ion-selective membrane (8) comprises an extracellular polymeric substance (EPS) which is traversed by nanowires formed by microorganisms.

11. The device according to any one of claims 6 to 10, wherein the aqueous electrolyte (7) contains substances comprising oxygen, hydrogen, methane, hydrogen sulphide, ammonium, ammonia, saltpetric acid, nitrates, nitrites, sulphates, basic organic carbon compounds such as glucose, acetate, lactate, pyruvate, propionate, fumarate, ethanol and/or methanol.

12. The device according to any one of claims 1 to 11, which further comprises a housing, wherein the biofilter and the biofuel cell are accommodated in the housing, are separated from one another by an intermediate wall therein, wherein the intermediate wall (16) has recesses (13) in a section through which the biofuel cell is in fluid and gaseous communication with the biofilter, and wherein the housing further has a plurality of openings and feeds (10-12, 17a, 17b) for the feeding and discharge of solids, liquids and/or gases.

13. A method for purifying gas mixtures and for generating electric current, **characterized in that** in the device according to any one of the claims 1 to 12 steps are performed comprising:
(a) introducing the gas mixture to be purified through the biofilter;
(b) incubating the gas mixture in the device, wherein the incubation time is 5 to 60 minutes; and
(c) introducing oxygen-containing air or oxygen through the biofuel cell while simultaneously discharging the purified gas mixture from the device.
wherein substances are transferred from the biofilter into the biofuel cell and after step (c) the steps are repeated cyclically from (a).

14. The method according to claim 13, further comprising:
(d) moistening the growth material in the biofilter.

15. The method according to any one of claims 13 to 14, wherein the oxygen content in the housing of the device is reduced so that carbon dioxide instead of oxygen serves as an electron acceptor and carbon is thereby converted to methane.

## Revendications

1. Dispositif de décomposition de gaz à partir de mélanges gazeux et de génération de courant électrique comprenant:
a) une pile à biocarburant; et
(b) un biofiltre; comprenant
(i) un tas de matériel de croissance (3);
(ii) un dispositif d'humidification pour humidifier le matériau de croissance; et
(iii) des micro-organismes (5, 6);
dans lequel la pile à biocarburant et le biofiltre sont connectés l'un à l'autre de telle manière qu'au moins des gaz puissent circuler entre eux et des substances puissent être alimentées du biofiltre dans la pile à biocarburant,
le dispositif d'humidification est conçu pour distribuer un liquide en fines gouttes, le vaporiser ou l'atomiser sous forme de brouillard, et
les micro-organismes (5, 6) sont appliqués sur le matériau de croissance (3) et immobilisés sur celui-ci dans un biofilm.

2. Dispositif selon la revendication 1, dans lequel le biofiltre comprend un matériau de croissance (3) choisi dans le groupe comprenant: le bois, le bambou, les fibres de noix de coco, le plastique, les boules de cellules en treillis, les mousses à cellules ouvertes et la roche volcanique, le matériau de croissance comprenant de préférence des copeaux de bois (3).

3. Dispositif selon l'une des revendications 1 ou 2, dans lequel le biofiltre comprend des microorganismes (5, 6) choisis dans le groupe comprenant:
(a) des micro-organismes aérobies oxydant le méthane;
(b) des micro-organismes anaérobies oxydant le méthane;
(c) des micro-organismes oxydants le soufre;
(d) des micro-organismes sulfato-réducteurs;
(e) des bactéries d'acide lactique, de préférence les lactobacillales;
(f) des moules, de préférence des champignons du genre des moules à brosses;
(g) des micro-organismes dégradant le CO;
(h) des micro-organismes bioluminescents;
(i) des micro-organismes aérobies et anaérobies dénitrifiants (6); et
(j) des archéobactéries oxydantes.

4. Dispositif selon la revendication 3, dans lequel le biofiltre comprend au moins un microorganisme de chacun des sous-groupes (a) à (j).

5. Dispositif selon la revendication 3 ou 4, dans lequel le biofiltre en tant que représentant des sous-groupes (a) à (j) comprend les microorganismes suivants:
(a) *Nitrosopumilus maritimus;*
(b) *Geobacter humiredudens, Pelobacter carbinolicus;*
(c) *Chlorobium limicola;*
(d) *Thermodesulfobacterium sp.;*
(e) *Lactobacillus casei;*
(f) *Pénicillium roqueforti;*
(g) *Rhodospirillium rubrum;*
(h) *Aliivibrio fischeri;*
(i) *Pseudomonas stutzeri;* et
(j) *Crenarchaeota(a), Methanospirillium hungatei* et *Nanoarchaeum equitans.*

6. Dispositif selon l'une des revendications 1 à 5, dans lequel la pile à biocarburant comprend:
(i) une anode (2);
(ii) une cathode (1);
(iii) un fil conducteur (9a) reliant l'anode (2) et la cathode (1);
(iv) un électrolyte aqueux (7); et
(v) des micro-organismes (4, 6);
l'anode (2) et la cathode (1) étant immergées dans l'électrolyte (7), le fil conducteur (9a) passant principalement à l'extérieur de l'électrolyte (7) et en outre des micro-organismes exoélectrogènes (4) étant immobilisés sur la surface de l'anode.

7. Dispositif selon la revendication 6, dans lequel l'anode (2) a la forme d'un mat et comprend un matériau porteur à pores ouverts,
et dans lequel la cathode (1) comprend de l'oxyde de magnésium ou de l'oxyde de manganèse,
dans lequel le matériau support est recouvert d'un matériau inorganique électriquement conducteur.

8. Dispositif selon l'une des revendications 6 à 8, dans lequel les microorganismes exoélectrogènes (4) suivants sont situés sur la surface anodique: *Geobacter sulfurreducens, Geobacter metallireducens GS-15, Shewanella oneidensis MR-1, Synechocystis sp. PCC6803, Pelotomaculum thermopropionicum* et *Desulfobulbaceae.*

9. Dispositif selon l'une des revendications 6 à 9, dans lequel la pile à biocarburant contient en outre les microorganismes suivants:
(a) *Monascus purpureus;*
(b) *Desmodesmos substicatus;*
(c) *Rhodospirillium rubrum;*
(d) *Erytrobacter litoralis;*
(e) *Bacillus subtilis subsp. Spizizenii;*
(f) *Clostridium cellulovorans;*
(g) *Thiosphaera pantothropha;*
(h) des nitrifiants choisis dans le groupe comprenant *Nitrosomonas, Nitrosococcus, Nitrosospira, Nitrobacter, Nitrospina, Nitrococcus* et *Nitrosopumilus maritimus;*
(i) des bactéries méthanotrophes choisies dans le groupe comprenant: *méthylocystacées* et méthylococcacées; et
j) des micro-organismes anaérobies et aérobies dénitrifiants (6).

10. Dispositif selon l'une des revendications 6 à 9, dans lequel il y a une membrane sélective d'ions (8) entre l'anode (2) et la cathode (1), dans lequel la membrane sélective d'ions (8) comprend une substance polymère extracellulaire (EPS) qui est pénétrée par des nanofils formés par des micro-organismes.

11. Dispositif selon l'une quelconque des revendications 6 à 10, dans lequel l'électrolyte aqueux (7) contient des substances comprenant de l'oxygène, de l'hydrogène, du méthane, du sulfure d'hydrogène, de l'ammonium, de l'ammoniac, de l'acide nitrique, des nitrates, des nitrites, des sulfates, des composés organiques de carbone simples tels que le glucose, l'acétate, le lactate, le pyruvate, le propionate, le fumarate, l'éthanol et / ou le méthanol.

12. Dispositif selon l'une quelconque des revendications 1 à 11, comprenant en outre un boîtier logeant le biofiltre et la pile à biocarburant, dans lequel le biofiltre et la pile à biocarburant sont séparées l'un de l'autre par une paroi intermédiaire, la paroi intermédiaire (16) ayant dans une section des évidements (13) à travers lesquels la pile à biocarburant est en connexion fluide et gazeuse avec le biofiltre et dans lequel en outre a le boîtier une pluralité d'ouvertures et mangeoires (10-12, 17a, 17b) pour l'alimentation et l'élimination des solides, des liquides et / ou des gaz.

13. Procédé de purification de mélanges gazeux et de génération de courant électrique, **caractérisé en ce que** des étapes sont réalisées dans le dispositif selon l'une des revendications 1 à 12, comprenant:
(a) introduire le mélange gazeux à nettoyer à travers le biofiltre;
(b) incuber le mélange gazeux dans le dispositif, le temps d'incubation étant de 5 à 60 minutes; et
(c) introduire de l'air contenant de l'oxygène ou de l'oxygène à travers la pile à biocarburant tout en retirant simultanément le mélange de gaz nettoyé de l'appareil,
dans lequel les substances sont transférées du biofiltre dans la pile à biocarburant et après l'étape (c), les étapes sont répétées cycliquement à partir de (a).

14. Procédé selon la revendication 13, comprenant en outre:
(d) humidifier le matériel de croissance dans le biofiltre.

15. Procédé selon l'une quelconque des revendications 13 à 14, dans lequel la teneur en oxygène dans le boîtier du dispositif est réduite de sorte que le dioxyde de carbone au lieu de l'oxygène sert d'accepteur d'électrons et le carbone est converti en méthane.
